# EUROPEAN PATENT SPECIFICATION

(11) **EP 2 870 301 B1**
(45) Date of publication and mention of the grant of the patent: **23.09.2020**
(21) Application number: 13745870.9
(22) Date of filing: 05.07.2013
(51) Int. Cl.: E04B 1/19, A47C 1/00, B64C 3/48, E04B 1/344, A47C 3/00, B64C 1/06, B64C 1/22, B64C 3/40, E01D 6/00, E01D 19/00, B64D 11/06, B64C 1/00, B60N 2/68

(54) **ADJUSTABLE STRUCTURES**
EINSTELLBARE STRUKTUREN
STRUCTURES AJUSTABLES

(30) Priority: 06.07.2012 GB 201212102; 07.05.2013 GB 201308176; 07.05.2013 GB 201308180; 07.05.2013 GB 201308184
(43) Date of publication of application: 13.05.2015
(73) Proprietor: Harkin, Paul, Stamford, Lincolnshire PE9 3TD (GB)
(72) Inventor: Harkin, Paul, Stamford, Lincolnshire PE9 3TD (GB)
(74) Representative: HGF
(86) International application number: PCT/GB2013/051792
(87) International publication number: WO 2014/006422

(56) References cited:
- EP-A2- 0 828 044
- WO-A2-2008/011375
- WO-A2-2008/011375
- DE-C1- 10 130 216
- DE-C1- 10 130 216
- GB-A- 2 303 650
- US-A- 3 864 049
- US-A- 3 864 049
- US-A1- 2004 085 657

## Description

This invention relates generally to structures that are adjustable, for example whose shape changes or is able to change in use. More particularly, although not exclusively, the present invention relates to structures whose configuration is changeable for adapting to different requirements and/or in response to different circumstances, conditions and/or stimuli. The present invention also relates to elements that are particularly useful in such reconfigurable structures as well as other shape changing structures such as bridges that permit limited and/or controlled movement in response to environmental conditions such as wind. In addition, the present invention relates to elements that are useful in deformable and/or passively adjustable and/or reconfigurable structures, for example cushioning devices or tyres.

The concept of reconfigurable structures is known and in recent years, developments have produced an increasing variety of such structures and buildings with movable functions. Typical examples are bridges that open to allow ships to pass, sliding roofs of football or baseball stadiums, aircraft with sweeping wings, automobiles with convertible roofs and artistic monuments. Generally, the moving behaviour of such structures is limited to carriages that move on rails and/or elements that pivot about a hinge without changing their structural shape. More specifically, their behaviours are limited to one or more predetermined patterns and/or states rather than being adaptable to respond differently to a plurality of different circumstances or environmental conditions.

This invention is particularly concerned with structures that are adaptable into any one of a plurality of different configurations. One known adaptable structure is generally referred to as a variable geometry truss, which is a truss structure composed of extendable and/or retractable members, fixed members and hinges. Multiple different truss shapes are created by varying the lengths of the extendable and/or retractable members. In addition, this invention is concerned with structures that are required to deform and/or react passively to external forces and/or stimuli.

US3864049 discloses a system for constructing underwater trusses by assembling elastic elements. WO2008011375 discloses a collapsible support structure with interconnected substantially triangular frame sections connected by flexible joints at corners thereof. EP0828044 discloses a portable protective structure having a framework made of corner connectors.

It is a general non-exclusive object of the invention to provide an improved shape changing structure and an improved joint for such shape changing structures.

Accordingly, one aspect of the invention provides an adjustable structure comprising an array of beams pivotally connected together at their ends by one or more tension joints, the or each tension joint comprising two or more entwined or intertwined flexible lines connected to adjacent beam ends by respective beam connectors, each end of each line being received and secured to a respective beam connector, wherein at least one of the lines (31) is adjustably connected to at least one beam end by a tension adjustor (32) of the beam connector (3) which has a threaded portion that threadedly engages the beam end for adjusting the tension of the line (31) along said beam.

Another aspect of the invention provides an adjustable structure comprising an array of beams pivotally connected together at their ends by one or more tension joints, the or each tension joint comprising three or more flexible lines formed integrally or bonded together at one of their ends and connected by a beam connector to a respective beam end at the other of their ends, wherein at least one of the lines is adjustably connected to at least one beam end by a tension adjustor of the beam connector which has a threaded portion that threadedly engages the beam end for adjusting the tension of the line along said beam.

The adjustable structure may comprise a first structural layer defined by a first array of extendable and/or retractable rods or beams pivotally connected to each other at their ends and a second structural layer connected to the first structural layer and defined by a second array of extendable and/or retractable rods or beams pivotally connected to each other at their ends, wherein at least a portion of the second layer is outside the volume defined by the first structural layer and the extendable and/or retractable rods or beams in the second array are more densely packed than the extendable and/or retractable rods or beams in the first array.

The provision of two layers of extendable and/or retractable rods or beams, one of which is more densely packed than the other, allows for coarse adjustment of the structure by the first layer and fine adjustment of the structure, e.g. an external skin of the structure, using the second layer. The term "extendable" and the term 'retractable' as used herein refer to elements that are adjustable in length, either passively or actively.

Preferably, one end of one or more extendable and/or retractable rods or beams of the second layer is or are connected, e.g. pivotally connected, to an intermediate or central portion or at an intermediate or central position of an or one of or a corresponding or respective extendable and/or retractable rod or beam of the first layer. More preferably, the second structural layer is connected to the first structural layer by one end of each of a plurality of extendable and/or retractable rods or beams of the second layer being pivotally connected to an intermediate or central portion of a respective or adjacent extendable and/or retractable rod or beam of the first layer.

Connecting the structural layer by connecting ends of the rods or beams of the second layer to an intermediate or central portion of respective or adjacent rods or beams of the first layer facilitates a more densely packed second layer.

For the avoidance of doubt, the term "intermediate" as used herein refers to any position between the ends of the rod or beam or element.

The structure may comprise three or more, e.g. four or more or five or more, structural layers that may be defined by respective arrays of extendable and/or retractable rods or beams connected, for example pivotally connected, to each other, e.g. at their ends, and/or to adjacent layers. In such embodiments, the density of each successive one of the layers preferably increases toward the outermost layer. The structure may further comprise an outer skin, which may be connected or secured, for example pivotally connected or secured, to an uppermost and/or outermost structural layer, e.g. by one or more or the fixing plates or skin connectors that may be connected to one or more outermost rods or beams of the outermost structural layer.

The ends of one or more extendable and/or retractable rods or beams of the second array may be connected, e.g. pivotally connected, to a first intermediate portion of a respective or adjacent extendable and/or retractable rod or beam of the first array and/or the ends of one or more further extendable and/or retractable rods or beams of the second array may be connected, e.g. pivotally connected, to a second intermediate portion, which is preferably different from the first intermediate portion, of a respective or adjacent extendable and/or retractable rod or beam of the first array. Additionally or alternatively, one or more extendable and/or retractable rods or beams of the second array may be connected, e.g. pivotally connected to a third and/or further intermediate portion of a respective or adjacent extendable and/or retractable rod or beam of the first array. The first and second and/or third and/or further intermediate portions are preferably equispaced along the extendable and/or retractable rod or beam. The ends of one or more extendable and/or retractable rods or beams of the second array may be connected, e.g. pivotally connected, to ends of one or more extendable and/or retractable rods or beams of the first array. By connecting rod or beam ends of the second layer to both the ends and intermediate or central portions of the rods or beams of the first layer creates a more densely packed second layer.

Additionally or alternatively, the connection between the first array of rods or beams and/or the connection between the second array of rods or beams and/or the connection between the rods or beams of the first array and the rods or beams of the second array may comprise an entwined or intertwined line or lines. Preferably, the connection comprises a tension joint, for example including two or more entwined or intertwined lines that may be connected to adjacent rod or beam ends. More preferably, at least one of the lines is adjustably connected to at least one rod or beam by a tension adjustor.

In alternative embodiments, the connection between the first array of rods or beams and/or the connection between the second array of rods or beams and/or the connection between the rods or beams of the first array and the rods or beams of the second array may comprise three or more integral lines. The integral lines may be formed as a single piece, e.g. by moulding or bonding. In such embodiments, each line may be connected to a respective rod or beam end and/or at least one of the lines may be adjustably connected to at least one rod or beam by a tension adjustor.

A further aspect not forming part of the invention provides a beam for use in the above structure, the beam comprising a beam connector including a barrel, a line and a tension adjustor, wherein a portion of the line is held within the barrel and adjustable along the beam by a threaded portion of the tension adjustor which threadedly engages the barrel.

The line or cord may comprise an enlarged portion and/or head portion at or adjacent one of its ends, which may comprise a knot or moulded head, e.g. that engages the tension adjustor. The tension adjustor may comprise two or more telescopic elements, for example a first telescopic element that engages the line or cord, e.g. the enlarged portion or head portion thereof, and/or a second telescopic element that may telescopically engage the first telescopic element. The first and second telescopic elements may be engaged and/or configured to telescopically extend and/or retract relative to one another, for example when one of them is rotated relative to the other and/or relative to the barrel.

In a preferred embodiment, the first telescopic element threadedly engages the barrel and/or the rod or beam and/or a threaded element secured or connected to the barrel or rod or beam. The first telescopic element may radially engage the second telescopic element, for example by one or more radial elements or pins connected or secured to one of the first and second telescopic elements.

The radial elements or pins may engage a slot in the other of the first and second elements, e.g. to inhibit or prevent relative rotation therebetween and/or to permit axial or telescopic movement therebetween.

The first and/or second telescopic element, preferably the second telescopic element, may comprise a grip feature or element, for example a flat portion or section, e.g. for engaging with an adjustment tool. The first and/or second telescopic element, preferably the second telescopic element, may also comprise a tapered end. The tapered end may be configured to permit uninhibited pivoting about the entwined or intertwined or integral or bonded lines relative to adjacent beam ends, and/or rounded edges, e.g. to inhibit undue stresses from being exerted on the line.

The tapered end may comprise a flattened terminal end whose external circumferential edge may be rounded, for example to enable smooth pivoting of the connectors relative to one another, and/or whose internal circumferential edge may be rounded, for example to inhibit undue stresses from being exerted on the line.

The adjustable structure, for example one or more or each or all of the extendable and/or retractable rods or beams or infill elements or telescopic elements, may comprise a regulator or resistance means that may be configured to inhibit, e.g. partially inhibit, the extension and/or retraction thereof. The regulator or resistance means may be configured to provide a first resistance to the extension of the structure or rod or beam or element and/or a second resistance to the retraction of the structure or rod or beam or element, wherein the second resistance may be different to the first resistance. Additionally or alternatively, the regulator or resistance means may comprise a resilient means that may be configured to urge the structure or rod or beam or element toward an extended condition and/or toward a retracted condition.

In some embodiments, one or more of the extendable and/or retractable rods or beams or infill elements or telescopic elements comprises a base condition or length or default condition or length, for example wherein the regulator or resistance means is configured to provide a predetermined resistance force and/or to inhibit or resist the extension or retraction of the extendable and/or retractable rod or beam or infill element or telescopic element, e.g. from or toward the base or default condition or length. Additionally or alternatively, the regulator or resistance means may be configured to provide a predetermined restoration force and/or to urge or encourage the extendable and/or retractable rod or beam or infill element or telescopic element to the base or default condition or length.

In some embodiments, the resistance force is equal or comparable to the restoration force, for example wherein the regulator or resistance means may comprise a biasing means or biaser such as a resilient biasing means or biaser, e.g. a spring or like element or a pressurised pneumatic system, that provides both the resistance force and the restoration force. Additionally or alternatively, the regulator or resistance means may comprise a damping means or damper, for example a pneumatic or hydraulic or electromechanical or magnetic damper, e.g. to inhibit or resist the extension or retraction of the extendable and/or retractable rod or beam or infill element or telescopic element.

In some embodiments, the base or default condition or length may comprise or correspond to a fully extended or a fully retracted condition.

The adjustable structure may further comprise a drive means for extending or retracting the extendable and/or retractable rods or beams, e.g. the extendable and/or retractable rods or beams of the first and/or second array, and/or one or more, for example an array of, infill elements that may be pivotally connected at their ends to one or more or a respective extendable and/or retractable rod or beam of the first or second array. The infill elements may be extendable or retractable, e.g. they may be configured to extend or retract, in use, in response to the extension or retraction of the extendable and/or retractable rods or beams.

The adjustable structure may comprise a structural layer defined by an array of extendable and/or retractable rods or beams pivotally connected to each other at their ends, an array of infill elements pivotally connected at their ends to a respective or adjacent extendable and/or retractable rod or beam and a drive means configured to extend or retract the extendable and/or retractable rods or beams, wherein the infill elements are extendable or retractable, in use, in response to the extension or retraction of the extendable and/or retractable rods or beams.

Preferably, the array of infill elements is connected or comprised at an outer or external or exposed portion or surface or rods or beams of the structural layer. One or more or each infill element and/or one or more of the adjustable rods or beams may include a fixing plate or skin connector, e.g. connected to one or both ends and/or an intermediate or central portion thereof and/or to one or more rod or beam connectors. The fixing plate may be for attaching an outer skin to the structural layer. Where the adjustable structure comprises two or more structural layers, the array of infill elements may be comprised at an outer or external or exposed portion or surface or rods or beams of one or each layer or at points of contact between different layers. Preferably, the array of infill elements are comprised or provided or incorporated at an external or exposed portion or surface of the second layer.

The array or first array and/or second array of extendable and/or retractable rods or beams may comprise a three-dimensional and/or polygonal array, for example a triangular or pyramidal array or a quadrilateral or cuboidal array or tetrahedral or octahedral array any other polygonal array or combination thereof. Preferably however, the array or first array and/or second array comprises a triangular and/or pyramidal and/or tetrahedral and/or octahedral array.

One or more of the rod or beam connectors may further comprise an anti-rotation element. The anti-rotation element may comprise a strip, for example a flexible strip, that may be secured to one or more, e.g. two or more, preferably a pair of adjacent, rods or beams and/or a pair of infill elements and/or a combination of rods or beams and infill elements.

The anti-rotation elements are particularly useful where the adjustable rods or beams include a fixing plate or skin connector. Preferably, the anti-rotation elements prevent or inhibit excessive rotation of each rod or beam or infill element round their own respective longitudinal axes, whilst at the same time the form and position and inherent flexibility of the elements still permit freedom of rotation of the rods/beams around, or approximately around, the connection point of the rods or beams.

At least some of the infill elements may be connected, for example pivotally connected, e.g. by an infill connector, at one or both ends to a rod or beam, for example an extendable and/or retractable rod or beam. In some embodiments, the infill elements are connected at one or both ends to an end or intermediate or central portion of a respective extendable and/or retractable rod or beam, e.g. of the array or first array and/or second array. Where the array or first array and/or second array comprises a triangular and/or pyramidal and/or tetrahedral and/or octahedral array, the infill elements are preferably connected, for example pivotally connected, at each end to an intermediate or central portion of a respective extendable and/or retractable rod or beam, e.g. of the array or first array and/or second array.

At least one or each infill element may comprise a series of telescopic parts, which may be tubular, e.g. tubes, each of which parts preferably have a rectangular cross-section, but alternatively may have a square, circular, oval, C or channel shape or any other cross-section, preferably with an anti-rotation feature such as a key and a slot or keyway. In some embodiments, the at least one or each infill element includes a series of telescopic parts that extend telescopically from a central part, for example from either side of the central part. One or each end of one or each infill element may include a fork or a fork part, for example secured or connected or pivotally secured or connected thereto. Preferably, one of the forks or fork parts of the or each infill element is movable or pivotable, for example relative to the infill element or telescopic parts or outermost telescopic part, e.g. about the longitudinal axis of the infill element. More preferably, the other of the forks or fork parts is non-movable or non-pivotable, for example relative to the infill element or telescopic parts, e.g. the outermost telescopic part.

At least one or each infill connector may include a pair of brackets and/or a pivot pin, for example a first pivot pin, and/or a pair of pivot pins or further pivot pins, e.g. second pivot pins. The brackets may extend perpendicularly from one of the rods or beams, for example a central portion thereof, e.g. wherein the first pivot pin is mounted or pivotably mounted to and/or extending between them, for example in an orientation parallel to or on the longitudinal axis of the rod or beam. Each of the second pivot pins may extend through a hole in the fork or fork part, for example a hole in each of a pair of arms of the fork or fork part, and/or through a pair of shoulder elements, e.g. a pair of opposed hollow shoulder elements, and/or through a hole in the first pivot pin.

Each infill element may be pivotable about a first axis parallel to or on the longitudinal axis of the rod or beam, for example corresponding to the longitudinal axis of the first pivot pin and/or about a second axis perpendicular to the first axis, for example corresponding to the longitudinal axis of the second pivot pin. Each infill element may also be pivotable about a third axis, for example at only one end thereof, which third axis may correspond to the longitudinal axis of the infill element.

In addition, this pivot pin and fork arrangement may be used to connect the ends of some of the extendable and/or retractable rods or beams of the second array at the middle and/or intermediate points of the extendable and/or retractable rods or beams of the first array.

At least one or each rod or beam may comprise a series of telescopic elements or tubes, for example hollow telescopic tubes, that may extend from each side of a central element or portion or tube. The hollow telescopic tubes may be round in cross section, and therefore in order to prevent unwanted rotation of the telescopic elements or hollow tubes along their shared longitudinal axis, a key or ridge that engages with a slot or keyway is incorporated into each section of the telescoping elements or hollow tubes. One or more of the fixing plates, for example one or more intermediate fixing plates, may be equispaced along the length of the rods or beams, e.g. between the ends thereof. In some embodiments, one fixing plate is connected or secured or mounted to the central portion or tube and/or one or more further fixing plates are connected or secured or mounted at intermediate positions on the rod or beam, for example by a carriage or a respective carriage. One of or the or each carriage may comprise one or more, for example a pair, of arms, e.g. one on either side of the rod or beam or telescopic elements. The arm or arms may be connected or secured or mounted at one of their ends to one of the telescopic elements, for example the end of one of the telescopic elements, and/or at their other end or ends to a sliding element or ring that may be slideable along another one of the telescopic elements. Alternatively, the sliding element or ring may be omitted, such that the arm or arms are connected to or secured from or mounted solely at one of the ends of the telescopic elements.

The drive means preferably comprises a drive motor, but may comprise any one or more of an electric motor, hydraulic, pneumatic, solenoid, magnetic, electromechanical, chemical, electrochemical or any other means. The drive means may be connected or coupled to a drive shaft that may be connected or coupled to the rod or beam or at least one, preferably all, of the telescopic elements. The drive shaft may be comprised of one or more telescoping portions, with each portion preferably comprising a keyed drive shaft, which may include a fixed gear secured thereto, e.g. to an end thereof, and/or rotatably mounted to one of the telescopic elements, e.g. an end plate that may be secured thereto such as to a first end thereof. One or more, for example each, of the other telescopic elements in the series may comprise an end plate that may include a movable gear, for example rotatably mounted thereto, which movable gear may slidably engage the drive shaft, e.g. a key in the drive shaft, e.g. such that the movable gear rotates on rotation of the drive shaft but is able to slide freely therealong. One or more, for example each, of the telescopic elements may also include a drive gear that may be secured to the end of a threaded shaft and/or rotatably mounted to the telescopic element or the end plate thereof, e.g. such that the drive gear engages the movable gear of the drive shaft. One or more, for example each threaded shaft may also engage one or more subsequent telescopic parts in the series, for example a threaded hole therein or in the end plate thereof.

One or more, preferably all, of the drive shaft and/or the fixed gear and/or the movable gears and/or the drive gears and/or the threaded shaft may be at least partially located or contained in or within the rod or beam or telescopic elements and/or central element or portion or tube.

In use, a torque provided by the drive motor preferably causes the drive shaft to rotate, e.g. thereby rotating the fixed gear and/or one or more of the movable gears, which preferably causes the threaded shaft or shafts to rotate and/or force the series of telescopic elements to extend and/or retract, for example depending on the direction of rotation of the drive shaft of the drive motor. The structure may further comprise a skin or membrane, such as a layer of material or fabric, that is preferably flexible, secured thereto, for example to an outer portion or outer portions thereof, e.g. to one or more, preferably a plurality, of the fixing plates. One or more of the fixing plates or skin connectors connected to the ends or to the rod or beam connectors may be connected to the line or lines or directly to the end of one of the rods or beams. One or more of the fixing plates or skin connectors may connect to the skin or membrane by bonding or a clamp arrangement and/or a restraining fixing passing through a hole in the skin or membrane, e.g. at each connection point.

There may be provided a seat or chair or support surface, e.g. other surface that is touched by and/or supports the body of a person using it or any other object, comprising an adjustable structure as described above. The seat or chair or support surface may comprise two or more, preferably three or more, more preferably four or more and most preferably five or more, structural layers, for example defined by respective arrays of extendable and/or retractable rods or beams that may be pivotally connected to each other at their ends and/or to one or more adjacent layers. Preferably, the density of each successive one of the layers of the seat or chair or support surface increases toward the outermost layer. The seat or chair or support surface may comprise a base, for example secured or connected, e.g. pivotally secured or connected, to a lowermost structural layer, and/or a skin or an outer skin, for example a resilient and/or foam and/or rubber/latex based skin that may comprise a polymeric or elastomeric or elastic material, which may be connected or secured, for example pivotally connected or secured, to an uppermost and/or outermost structural layer, e.g. by one or more or the fixing plates or skin connectors. The seat or chair or support surface may incorporate a control system. Alternatively, the seat or chair or support surface may be configured to provide a cushioning effect, for example where the structure comprises one or more extendable and/or retractable rods or beams or infill elements or telescopic elements with a regulator or resistance means as described above.

Indeed, some structures may require passive resistance to deformation such as, but not limited to, vehicle panels and/or bumpers and/or fenders, tyres or wheels, devices that function in a similar manner to airbags, crash mats, cushions or cushioning devices, armour such as for military vehicles, foundations or components of foundations for building structures such as those in earthquake zones or where vibration damping is required, acoustic test chambers, micro- or nano-scale engineering or manufacturing facilities.

There may also be provided a control system or controller or control unit for monitoring and/or controlling an adjustable structure as described above. The control system may, for example, be connected to or comprised or incorporated in or within a seat as described above.

The control system or controller or control unit may be operatively connected to the drive means, for example to the drive motors, e.g. for providing command signals and/or power thereto, and/or to one or more, e.g. a series of, pressure sensors that may be connected to or incorporated within the fixing plates or skin connectors or skin or membrane, e.g. for receiving input signals therefrom and/or to one or more further sensors or other measurement elements or means. The control system or controller or control unit may be connected to the drive means and/or sensors by one or more wires or cables and/or a conductive path formed by one or more parts of the structure and/or in wireless communication therewith.

The control system or controller or control unit may be operable or configured or configurable or programmable to operate in one or more of two or more, e.g. a plurality of modes that may be selectable, for example by an input. The two or more modes may include one mode, e.g. a first mode, in which adjustment of the rods or beams is dependent upon signals received, in use, from the one or more sensors, for example by a first predefined relationship, and/or another mode, e.g. a second mode, in which adjustment of the rods or beams is dependent upon such signals in another, e.g. a second, predefined relationship that may be different from the first relationship and/or another mode, e.g. a third mode, in which adjustment of the rods or beams is independent of such signals.

Preferably, the control system or controller or control unit is operable to control two or more groups of rods or beams or layers in a respective different one or more of the two or more or plurality of modes. For example, the grouping may correspond to the arrays or layers of rods or beams, wherein the controller may be operable or configured or configurable or programmable to control the outermost or uppermost layer in the first mode and/or the innermost or lowermost layer in the third mode and/or intermediate layers in the second mode or a respective second or further mode. In some embodiments, the effect of the signals received, in use, from the one or more sensors is greater in the control of the outermost or uppermost layer than their effect in the control of the innermost or lowermost and/or intermediate layers. For example, the effect of such signals may increase or decrease progressively toward the outermost or uppermost layer or may be equal throughout the various layers.

Some embodiments comprise a mode, e.g. a first mode, in which signals received from one or more sensors, e.g. pressure sensors, are compared to signals received from adjacent sensors, e.g. pressure sensors, and/or the rods or beams in one or more uppermost, e.g. denser, layers are operated, for example to alter only or mainly the outer portion of the structure, e.g. to provide a pre-determined stiffness or softness and/or to simulate a cushion-like structure. In such embodiments, the degree of stiffness or softness may be selectable using the input, which may adapt a control algorithm accordingly.

Some embodiments comprise a mode, e.g. a second mode, in which signals received from one or more sensors, e.g. pressure sensors, are used to operate the rods or beams in one or more lowermost, e.g. coarser, structural layers, for example to alter configuration of the adjustable structure or seat.

Some embodiments comprise a mode, e.g. a third mode, in which signals received from one or more sensors, e.g. pressure sensors, are used to operate rods or beams in all of the structural layers according to a predetermined relationship to provide adjustment of an intermediate coarseness. For example, the control system or controller or control unit may be configured in this mode to alter the surface topography of the adjustable structure when pressure or some other input is applied to or measured at one or more areas of the structure or the skin.

Some embodiments of the control system or controller or control unit comprise a control model, for example a small or equal or larger scale model that may be configured to control the shape or configuration of the adjustable structure using force feedback. The model may be operatively connected to the control system or controller or control unit, for example to be used in conjunction with one mode, e.g. a fourth mode. The model may comprise an internal structure that may, but need not, mimic the rod or beam arrays of the adjustable structure, e.g. a geometric array of telescopic rods or beams connected by pivotable joints, and/or may comprise one or more, e.g. a series of, sensors for detecting forces applied to and/or movements of portions of the model and/or feeding inputs such as the measured forces back to the control system or controller or control unit. In this mode, the input signals received from the model are preferably used to control the rods or beams in the adjustable structure, for example to replicate the manipulation of the model by a user.

Optionally, the control system may be configured to feed back to the model resistance signals received from the adjustable structure, which signals may be used to generate a resistance to movement in the model, for example such that the user of the control model feels such resistance when changing the form of the control model. The resistance or resistances may be replicated in the model by the controlled deformation of its internal structure, e.g. with the deformations controlled either by localised control units on each rod or beam and/or one or more other elements of structure, and/or a cluster of rods or beams and/or one or more elements of internal structure, and/or a separate control unit.

The control system may also include further modes that incorporate any number of combinations of the aforementioned modes. In some embodiments, sensors are divided into different sectors, wherein each sector is configured to operate in one of the aforementioned modes. For example, in the case of the seat or chair or support surface described above the surface on which a user sits may be configured in the first mode and/or arm rests of the seat or chair or support surface may be configured in the second mode and/or pre-determined portions of a back rest of the seat or chair or support surface may be configured in the third mode. It will be appreciated that the control system may be configured with any number of combinations of the aforementioned modes or any further modes.

Embodiments may include a structural layer defined by an array of extendable and/or retractable rods or beams pivotally connected to each other at their ends, an array of infill elements pivotally connected at their ends to a respective or adjacent extendable and/or retractable rod or beam and a drive means configured to extend or retract the extendable and/or retractable rods or beams, wherein the infill elements are extendable or retractable, in use, in response to the extension or retraction of the extendable and/or retractable rods or beams.

The array of infill elements may be connected to outer rods or beams of the second or outermost structural layer, one or more of the outer rods or beams and/or infill elements comprising one or more fixing plates for attaching an outer skin to the structural layer.

Additionally or alternatively, each of one or more of the infill elements may be connected to an intermediate portion of one or more of the rods or beams by one or more infill connectors.

In some embodiments, each infill element may preferably be pivotable about first and second axes, the first axis being parallel to or on the longitudinal axis of the rod or beam and the second axis being perpendicular to the first axis. Additionally or alternatively, each infill element may include a first infill connector that is pivotable about a third axis corresponding to the longitudinal axis of the infill element and a second infill connector that is non-pivotable about the third axis.

In some embodiments, the connection between the rods or beams of the first layer and/or the connection between the rods or beams of the second layer and/or the connection between the rods or beams of the first and second layers may comprise an entwined or intertwined line or lines or formed of a single piece multi-legged flexible line connector element. The connection may comprise a tension joint. At least one line may be adjustably connected to at least one rod or beam by a tension adjustor. The line or cord may further comprise an enlarged head portion at or adjacent one of its ends that engages the tension adjustor. The tension adjustor may preferably threadedly engage a barrel to effect the adjustment. Additionally or alternatively, the tension adjustor may comprise a first telescopic element that threadedly engages the barrel and radially engages a second telescopic element such that relative rotation therebetween is prevented while permitting axial telescopic movement therebetween. The radial engagement between the first and second telescopic elements may, for example, be provided by one or more radial pins or ridges secured to one of the telescopic elements and engage a slot in the other of the telescopic elements. One of the telescopic elements may comprises a grip feature for engaging with an adjustment tool for adjusting the tension adjustor.

In some embodiments, one or more of the arrays comprises a three-dimensional polygonal array, for example a triangular or pyramidal or tetrahedral or octahedral array. In some embodiments, one or more of the rods or beams or infill element connectors may further comprises an anti-rotation element. Additionally or alternatively, each of the extendable and/or retractable rods or beams and infill elements may comprise a series of telescopic parts.

In yet further embodiments, the structure may comprise a drive motor coupled to a keyed drive shaft rotatably mounted to each rod or beam and slidably engaging a series of movable gears, wherein each movable gear is rotatably mounted to a respective telescopic part and secured to an end of a threaded shaft that threadedly engages one or more subsequent telescopic parts in the series to drive the extension and/or retraction of the telescopic parts of the rod or beam. The drive shaft, the fixed gear, the movable gears, the drive gears and the threaded shafts of each rod or beam may be contained within the telescopic elements. The structure may further comprise a flexible skin or membrane secured to an outer portion of the structure. The control system may be operatively connected to the or a drive means or one or more of the drive motors for adjusting, in use, the configuration of the structure. Additionally or alternatively, the structure may further comprise one or more sensors operatively connected to the control system for providing signals indicative of one or more measured parameters.

The line may comprise an enlarged head portion at or adjacent one of its ends that engages the tension adjustor. In some the embodiments, the tension adjustor threadedly engages a barrel to effect the adjustment.

In some embodiments, the tension adjustor may comprise a first telescopic element that threadedly engages the barrel and radially engages a second telescopic element such that relative rotation therebetween is prevented while permitting axial telescopic movement therebetween.

The radial engagement between the first and second telescopic elements may be provided by one or more radial pins or ridges secured to one of the telescopic elements and engage a slot in the other of the telescopic elements. One of the telescopic elements may comprises a grip feature for engaging with an adjustment tool, for example for adjusting the tension adjustor.

In some embodiments, one or more of the arrays may comprise a three-dimensional polygonal array, for example a triangular or pyramidal or tetrahedral or octahedral array.

In some embodiments, one or more of the rods or beams or infill element connectors may further comprises an anti-rotation element. Additionally or alternatively, each of the extendable and/or retractable rods or beams and infill elements may comprise a series of telescopic parts.

In yet further embodiments, the structure may comprise a drive motor coupled to a keyed drive shaft rotatably mounted to each rod or beam and slidably engaging a series of movable gears, wherein each movable gear is rotatably mounted to a respective telescopic part and secured to an end of a threaded shaft that threadedly engages one or more subsequent telescopic parts in the series to drive the extension and/or retraction of the telescopic parts of the rod or beam. The drive shaft, the fixed gear, the movable gears, the drive gears and the threaded shafts of each rod or beam may be contained within the telescopic elements. The structure may further comprise a flexible skin or membrane secured to an outer portion of the structure. The control system may be operatively connected to the or a drive means or one or more of the drive motors for adjusting, in use, the configuration of the structure. Additionally or alternatively, the structure may further comprise one or more sensors operatively connected to the control system for providing signals indicative of one or more measured parameters.

There may be provided a vehicle comprising a seat or chair or support surface as described above and/or a retractable table comprising an adjustable structure as described above.

There may be provided vehicles, such as aircraft and/or spacecraft and/or watercraft and/or landcraft, incorporating an adjustable structure as described above. Where the vehicle is an aircraft, one or more of the wings and/or tailplane and/or fuselage may comprise an adjustable structure as described above. Additionally or alternatively, the frame and/or internal furniture, for example a retractable table, of the vehicle may comprise an adjustable structure as described above. Additionally or alternatively, the structure is equally applicable to and may be incorporated in any general aerodynamic surfaces, for example that could be used in vehicles other than winged aircraft, for example helicopters, automobiles, motorcycles and the like. Additionally or alternatively, the structure is equally applicable to and may be incorporated in control surfaces and/or bodies of marine vehicles such as submarines and boats and the like.

Embodiments of the invention will now be described by way of example only with reference to the accompanying drawings in which:
Figure 1 is a perspective view of an adjustable structure according to one embodiment of the invention with a skin secured to an outer portion thereof;
Figure 2 is a partial side view of the structure of Figure 1 illustrating the two structural layers formed of respective arrays of extendable and/or retractable rods or beams aligned such that the skin is substantially planar;
Figure 3 is a partial side view similar to that of Figure 2 of an adjustable structure with a second structural layer according to an alternative configuration with the extendable and/or retractable rods or beams adjusted such that the skin has a nonplanar surface profile;
Figure 4 is a partial perspective view of a corner arrangement of four extendable and/or retractable rods or beams interconnected by a connection according to the invention;
Figure 5 is a partial perspective view of an arrangement of twelve extendable and/or retractable rods or beams interconnected by a connection according to the invention;
Figure 6 is a partial perspective view of an external assembly of extendable and/or retractable rods or beams interconnected by a connection according to the invention with a fixing plate secured thereto for attachment of the skin;
Figure 7 is a partial perspective view of a rod or beam connector according to the invention;
Figure 8 is a section view of the rod or beam connector of Figure 7;
Figure 9 is a partial top view of the top layer only of the adjustable structure of Figure 1 with part of the skin removed to illustrate the infill array;
Figures 10 and 10a illustrate partial perspective views of external assemblies of extendable and/or retractable rods or beams including an infill array with part of the skin removed;
Figure 10b is a partial perspective view of the connection between the midpoint of an extendable and/or retractable rod or beam of the first structural layer and the ends of extendable and/or retractable rods or beams of the second structural layer.
Figure 11 is a side view of one of the connections between infill rods or beams and extendable and/or retractable rods or beams;
Figure 12 is a perspective view of a series of telescopic tubes from one side of an extendable and/or retractable rod or beam from the adjustable structure of Figure 1;
Figure 13 is a similar view to that of Figure 12 with a portion of the tubes omitted to show the internal drive mechanism;
Figure 14 is a perspective sketch of a seat incorporating an adjustable structure of the invention;
Figure 15 is a perspective section view of the seat of Figure 14;
Figure 16 is a sketch illustrating a force feedback movement of the armrest of the seat of Figures 14 and 15;
Figure 17 is a sketch illustrating a force feedback surface adjustment of an outer portion of the seat of Figures 14 and 15;
Figure 18 is a sketch illustrating a small scale control model for adjusting the configuration of the seat of Figures 14 and 15;
Figure 19 is a sketch illustrating the movement of the chair in response to forces exerted on the control model of Figure 18;
Figure 20 is a sketch illustrating a pair of seats similar to those of Figures 14 to 19 in an airplane, train or other vehicle that includes a retractable table incorporating an adjustable structure according to the invention;
Figure 21 is a sketch similar to that of Figure 20 illustrating the chairs in a reclined condition;
Figures 22 to 24 are sketches of an aircraft incorporating adjustable structures according to the invention with the wings shown in different respective configurations;
Figure 25 shows cross-sectional views of alternative wing configurations of the aircraft of Figures 22 to 24; and
Figures 26 and 27 are cross-sectional sketches of the aircraft of Figures 22 to 25 with the fuselage shown in different respective configurations.

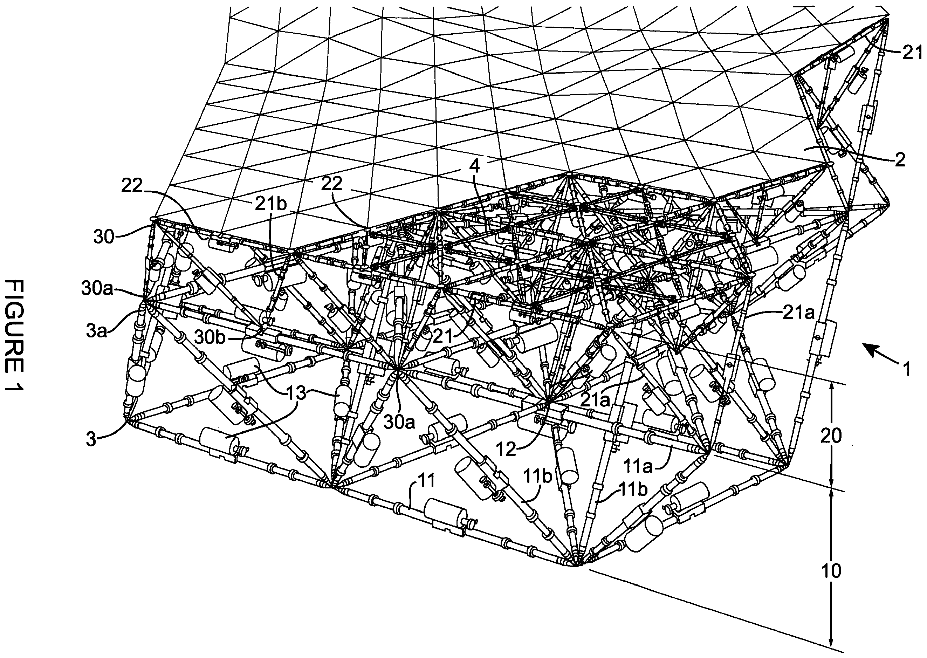

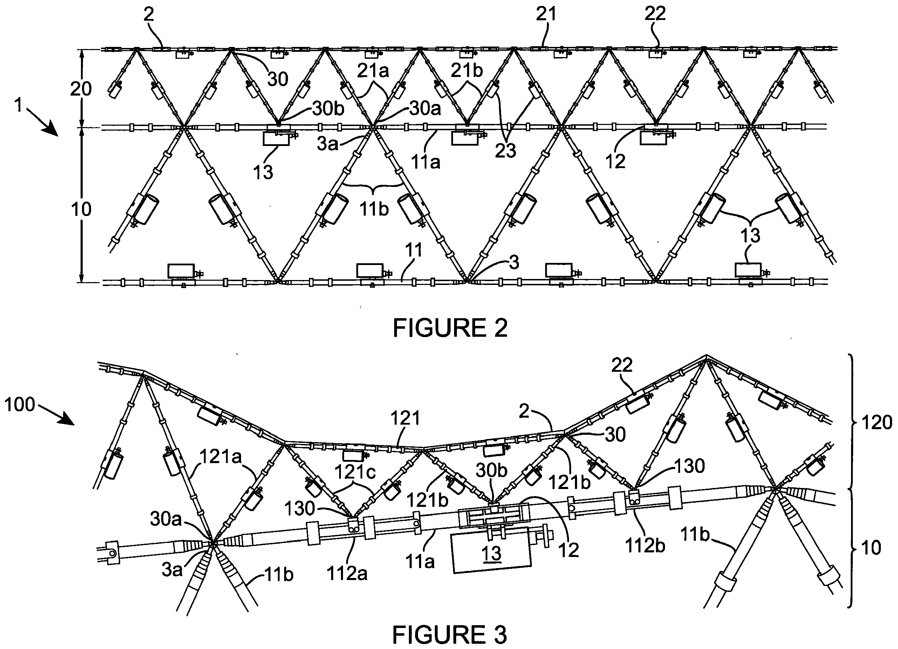

Figures 1 and 2 show an adjustable structure 1 with a skin 2, a first structural layer 10, a second structural layer 20 connected to the first structural layer 10 and an array of infill rods or beams 4. The first structural layer 10 includes a first array of extendable and/or retractable rods or beams 11, 11a, 11b pivotally interconnected to each other at their ends by entwined or intertwined or single piece multi-legged flexible line connector element joints between first rod or beam connectors 3 or 3a secured to the ends of the rods or beams 11, 11a, and 11b. The second structural layer 20 includes a second array of extendable and/or retractable rods or beams 21, 21a, 21b interconnected to each other at their ends by entwined or intertwined or single piece multi-legged flexible line connector element joints between second rod or beam connectors 30, 30a and 30b.

The array of rods or beams 11, 11a, 11b, 21, 21a, 21b of each of the first and second layers 10, 20 is arranged in a three dimensional triangular or pyramidal and/or tetrahedral and/or octahedral array in this embodiment. Other stable geometric arrangements may be formed. The second layer 20 is also outside the volume defined by the first structural layer 10 and the extendable and/or retractable rods or beams 21, 21a, 21b in the second layer 20 are more densely packed than the extendable and/or retractable rods or beams 11, 11a, 11b in the first layer 10. The infill rods or beams 4 are pivotally connected to central portions 22 of the uppermost rods or beams 21 of the second structural layer 20.

As shown more clearly in Figure 2, the rods or beams 21a of the second layer 20 are pivotally joined or connected via connectors 30a to the uppermost rods or beams 11a and the middle rods or beams 11b of the first layer 10 at the first layer 10 rod or beam connectors 3a to provide the more densely packed second layer 20. Similarly, the rods or beams 21b of the second layer 20 are pivotally joined or connected to the uppermost rods or beams 11a of the first layer 10 at a central portion 12 thereof via connectors 30b to provide the more densely packed second layer 20. Each rod or beam 11, 11a, 11b, 21, 21a, 21b includes a centrally mounted drive motor 13, 23 that drives the extension and/or retraction of the rod or beam 11, 11a, 11b, 21, 21a, 21b. It is intended that 'drive motor' and 'drives' in this context also mean rods or beams 11, 11a, 11b, 21, 21a, 21b can have their extension and/or retraction powered by hydraulic, pneumatic, solenoid, magnetic, chemical, electrochemical or other means.

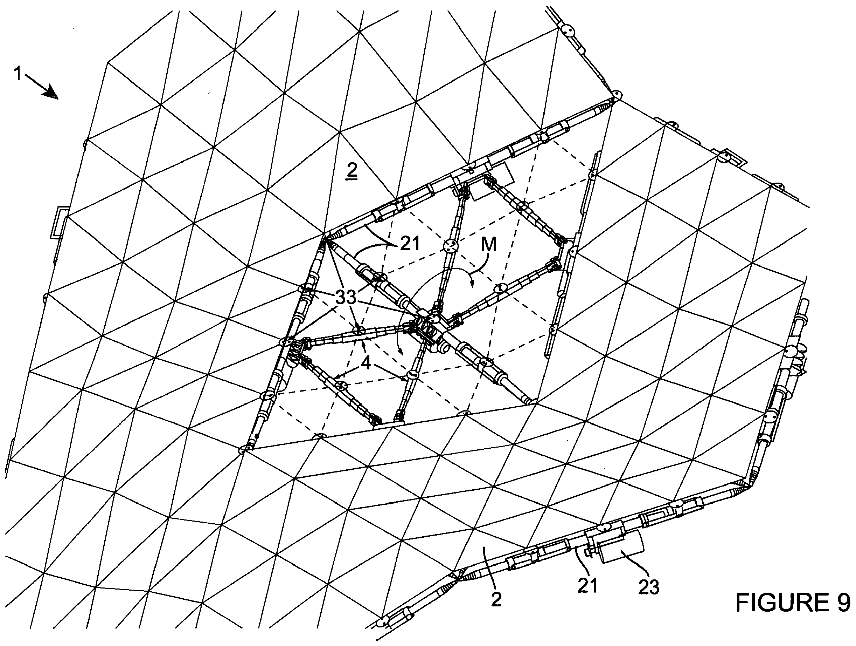

An alternative adjustable structure 100 with a more densely packed second layer 120 is shown in Figure 3, wherein like references depict like features and will not be described further. In this embodiment, rod or beam connectors 30a of the rods or beams 121a of the second layer 120 are pivotally joined or connected to the uppermost rods or beams 11a and middle rods or beams 11b of the first layer 10 at the first rod or beam connectors 3a. Rod or beam connectors 30b of rods or beams 121b of the second layer 120 are pivotally joined or connected to the uppermost rods or beams 11a of the first layer 10 at the central portion 12 of rods or beams 11a. Rod or beam connectors 130 of rods or beams 121c of the second layer 120 are pivotally joined or connected to the uppermost rods or beams 11a of the first layer 10 at two additional intermediate portions 112a, 112b thereof, each of which is preferably spaced centrally between the central portion 12 and the first rod or beam connectors 3a to provide the yet more densely packed second layer 120. This central spacing along the length of rods or beams 11a of connection points 112a and 112b between points 12 and connectors 3a is preferably constant, regardless of whether the rods or beams 11a are fully retracted, fully extended or at any degree of extension between the upper and lower limits of extension. Further connection points (not shown) of rod or beam connectors 130 of rods or beams 121c are to the central portion 42 of infill elements 4 shown in Figures 9 to 11, with the infill elements 4 connected to the rods or beams 11a of the top surface of the first layer 10.

A further alternative arrangement (not shown) with a yet further densely-packed second layer 120 comprises further rods or beams 121c that are pivotally joined or connected to the uppermost rods or beams 11a of the first layer 10 at three or more, e.g. four or more or five or more additional intermediate portions, in a similar arrangement to connections 112a and 112b. In some configurations, further connection points (not shown) of rod or beam connectors 130 of rods or beams 121c are to the infill elements 4, which are connected to the rods or beams 11a of the top surface of the first layer 10. The spacing along the length of rods or beams 11a for each of the connections of the rods or beams 121c between the central portion 12 of rods or beams 11a and the first rod or beam connectors 3a is preferably equal for all of the connections. This equal spacing along the length of rods or beams 11a of connection points for additional rods or beams 121c between points 12 and connectors 3a is preferably constant, regardless of whether the rods or beams 11a are fully retracted, fully extended or at any degree of extension between the upper and lower limits of extension.

The provision of connections between the ends of the lowermost rods or beams 21a, 21b, 121a, 121b, 121c of the second layer 20, 120 with both the ends 3a and also central or intermediate portions 12, 112a, 112b of the uppermost rods or beams 11a of the first layer 10 and, in some configurations, the central portion 42 of infill elements 4 of the first layer 10 provides a second layer 20, 120 with rods or beams 21, 21a, 21b, 121, 121a, 121b, 121c that are packed more densely than those in the first layer 10. Furthermore and as illustrated by Figure 3, further increasing the number of rods or beams 121, 121a, 121b, 121c relative to those in layer 10 and by providing additional relevant intermediate connection points 112a, 112b increases the density of the second layer 120 in comparison to the configuration shown in Figure 2 in layer 20.

As mentioned briefly above and as will be discussed further below with reference to the specific applications, providing a second layer 20, 120 of extendable and/or retractable rods or beams 21, 21a, 21b, 121, 121a, 121b, 121c that is more densely packed than the first layer 10 enables coarse adjustment of the structure by the first layer 10 and fine adjustment of the external skin 2 of the structure 1, 100 using the second layer 20, 120.

As shown in Figures 1 to 3, the size of the rods or beams 21, 21a, 21b, 121, 121a, 121b, 121c in the more densely packed second layer 20, 120 are proportionately smaller than those in the first layer 10 depending upon the density of the second layer 20, 120. The rod or beam connectors 30, 30b, 130 within the layer 20, 120 are sized accordingly. The rod or beam connectors 30a for layer 20, 120, at the interface with layer 10 at the connections with connectors 3a, may vary in size between being the same size as connectors 3a to being the same size as connectors 30, 30b, 130, or be any size between these upper and lower limits. However, the configuration of the rod or beam connectors 3, 3a, 30, 30a, 30b, 130 is the same aside from the difference in their scale.

References hereinafter to further features of the structure 1 of the first embodiment are equally applicable to the structure 100 according this embodiment. References hereinafter to rods or beams 11 can be equally applicable to rods or beams 11a, 11b, unless noted otherwise. References hereinafter to rods or beams 21, 121 can be equally applicable to rods or beams 21a, 21b, 121a, 121b, 121c, unless noted otherwise. References hereinafter to connectors 3, 30 can be equally applicable to connectors 3a, 30a, 30b, 130, unless noted otherwise.

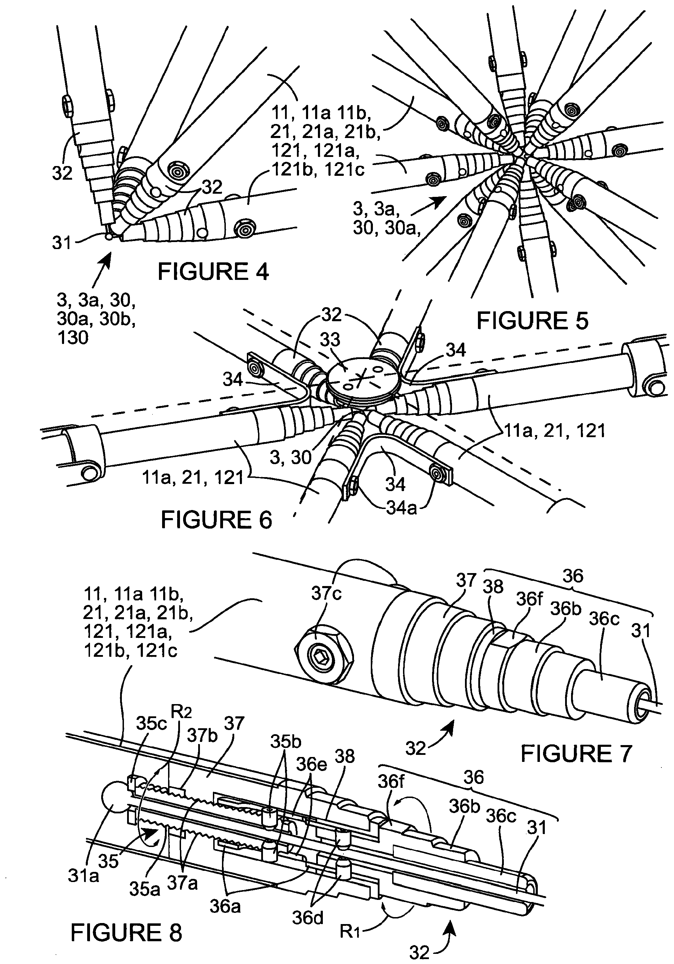

Figures 4 to 8 illustrate the construction of the entwined or single piece multi-legged flexible line connector element joints of rod or beam connectors 3, 30 in more detail. Each rod or beam connector 3, 30 receives and secures one end of a flexible line or cord 31, whose other end may be received and secured within another rod or beam connector 3, 30. The joint or connection between two or more rods or beams 21 is effected by intertwining the flexible lines 31 thereof during assembly, or by installing a single piece multi-legged moulded or bonded flexible line connector element and forming a structure 1, 100 shown in Figures 1 to 3 in which the connections are in tension. The tension of the flexible lines 31 may be adjusted using a tension adjustor 32 in order to provide a robust, yet flexible and pivotable connection between the rods or beams 11, 21, 121. Figure 4 shows an illustrative outer corner connection between four rods or beams 11, 21, 121, while Figure 5 shows an illustrative inner connection between twelve rods or beams 11, 21, 121.

Figure 6 shows an uppermost joint between rod or beam connectors 30 of rods or beams 11a, 21, 121 in the first or second layer 10, 20, 120 to which the skin 2 may be attached. This joint includes a circular fixing plate 33 and anti-rotation element 34. The fixing plate 33 includes a downwardly extending loop (not shown), which may or may not incorporate a tension adjuster (not shown), through which the flexible lines 31 of the connectors 30 extend to connect the plate 33 to the connector 30. Alternatively, the fixing plate 33 includes a downwardly extending single flexible line (not shown), which may or may not incorporate a tension adjuster (not shown), fixed back to plate 33, and the line may be tied to the flexible lines 31 of the connectors 30 to connect the plate 33 to the connector 30. Alternatively, the fixing plate 33 may connect, with or without a tension adjuster (not shown), to the single piece multi-legged moulded or bonded flexible line connector element which may be connected to the connector 30. The anti-rotation element 34 includes a flexible strip of material extending along and toward the connected end of adjacent rods or beams 11, 21, 121 and secured at each end to a respective one of the adjacent rods or beams 11, 21, 121 by one or more bolts 34a. It will be appreciated that the anti-rotation element 34 prevents twisting or rotation about the axis of the rods or beams 11, 21, 121 to ensure that the fixing plate 33 remains in the required orientation when plate 33 is located at any point along the length of rods or beams 11, 21, 121, and also when plate 33 is located on the infill rods or beams 4.

It is intended that anti-rotation elements 34 are installed throughout the array to prevent, or at least mitigate, the tendency for the rods or beams 11, 21, 121 to rotate about their longitudinal axis in general use if they are not otherwise constrained.

Referring now to Figures 7 and 8, the tension adjustor 32 includes a first part 35 and a tapered second part 36, both of which are rotatably received within a mounting barrel 37, which in turn is secured to the rod or beam 11, 21, 121. The first part 35 includes a hollow threaded shaft 35a with a radial bore adjacent a first, outer end thereof within which is securedly received a pair of pins 35b and a washer 35c that abuts a second, inner end of the threaded shaft 35a. The flexible line 31 includes an enlarged head 31a at one end, which can either be formed by a knot in the line or by a moulded feature. The flexible line 31 extends through the hollow first part 35 such that the head 31a is sized such that it cannot pass through the aperture of the washer 35c. The washer 35c can be omitted, provided that the head 31a of line 31 is sized such that it cannot pass through the radial bore of threaded shaft 35a.

The second part 36 includes a control collar 36a, a driving collar 36b and an extension collar 36c, all of which are hollow. The control collar 36a includes a radial bore adjacent a first, outer end thereof, within which is securedly received a pair of pins 36d, and a pair of opposed axial slots 36e along a portion thereof adjacent a second, inner end thereof. Each axial slot 36e of the control collar 36a slidably receives a respective one of the pins 35b of the first part 35 such that rotation R₁ of the control collar 36a causes the first part 35 to rotate as shown by arrow R₂, but allows axial movement therebetween.

The driving collar 36b includes a pair of opposed flats 36f at a central outer surface thereof, an axial counterbore at a first, outer end that securedly receives the extension collar 36c and a radial bore adjacent a second, inner end. The extension collar 36c is rounded perpendicular to the longitudinal axis of the rod or beam connectors at its outer end internally to inhibit undue concentrated stresses from being exerted on the flexible line 31, and to inhibit any tendency for the collar 36c to cut into flexible line 31, as loads acting upon the rods or beams may have a tendency to induce adjacent collars 36c to impose a shear load upon the flexible line 31. The extension collar 36c is also preferably rounded perpendicular to the longitudinal axis of the rod or beam connectors at its outer end on its outer face to enable the smooth rotation of the connectors around the approximate shared point of connection between the rods or beams 11, 21, 121. Collar 36c is preferably formed from a material with low friction qualities, to lessen the friction otherwise encountered when multiple collars 36c are in contact with each other and moving relative to each other in the assembled configuration, as shown in Figure 4, 5, 6. The second end of the driving collar 36b is received within the first end of the control collar 36a and securedly receives the pins 36d of the control collar 36a, thereby securing the control collar 36a and driving collar 36b together.

The mounting barrel 37 is hollow with a first, external end that receives a bearing sleeve 38 and a second, internal end with a threaded axial bore 37a with a counterbore that receives a nylon insert 37b with an internal thread that matches the threading in the bore 37a. The counterbore of mounting barrel 37 is sized so as to securedly hold and prevent the rotation of nylon insert 37b around the longitudinal axis of connector 3, 30. The mounting barrel 37 is received within an end of the rod or beam 11, 21, 121 and secured thereto by a bolt 37c on either side of the rod or beam 11, 21, 121. The second part 36 is received within the first end of the mounting barrel 37 and is rotatably engaged therewith by the bearing sleeve 38. The threaded shaft 35a of the first part 35 is received within and engages the threaded axial bore 37a at the second end of the mounting barrel 37, wherein the nylon insert 37b inhibits unwanted rotation of the first part 35 via the profile of the threaded axial bore within nylon insert 37b, whilst still permitting the relative threaded rotation of threaded shaft 35a within the threaded axial bore 37a, when induced by the manually-induced rotation of parts 35, 36.

In use, a plurality of rods or beams 11, 21, 121 are provided and their flexible lines 31 are entwined or intertwined with one another or formed of a single piece multi-legged flexible line connector element to form the structure 1. The tension adjustors 32 are then adjusted to provide the requisite tension between the connectors 3, 30 by rotating the driving collar 36b using a tool (not shown) that engages the flats 36f. This rotation R₁ causes the pins 36d of the control collar 36a to rotate, thereby causing the slots 36e of the control collar 36a to engage the pins 35b of the first part 35 and force the rotation R₂ of the first part 35. This rotation R₂ causes the first part 35 to retract into the rod or beam 11, 21, 121, due to the engagement of threaded shaft 35a with threaded bore 37a, and pushes the head 31a away from the point of the entwined or intertwined lines or the single piece multi-legged flexible line connector element, thereby tensioning the joint.

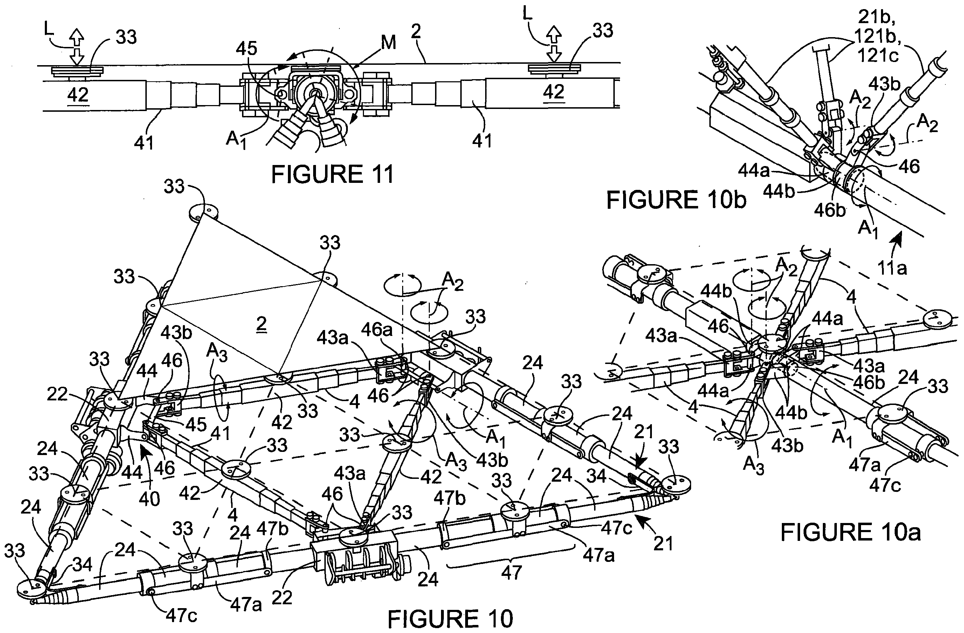

As shown more clearly in Figures 9 to 11, the infill elements 4 may be pivotally connected at their ends to infill connectors 40 mounted to central portions 22 of the uppermost rods or beams 11a of first layer 10, and/or uppermost rods or beams 21, 121 of the second layer 20, 120. Each infill element 4 is formed of a series of telescopic parts 41, which may extend telescopically from a central part 42. The telescopic parts 41 are configured to restrict the rotation of the telescopic parts 41 relative to each other along their longitudinal axis. The telescopic parts 41 are shown in Figure 10 with a rectangular cross section. Alternatively, the tubes may have a square cross-section, or any other cross-section, for example an oval, a C or channel shape, or a circular cross-section, provided an anti-rotation measure was used e.g. a key and a slot/keyway. A circular fixing plate 33 similar to those secured to the joints of the rods or beams 11a, 21, 121 may be secured to each central part 42. In certain arrangements of the structure comprised of multiple layers of rods or beams of varying scales, such as shown in Figure 3, additional infill elements 4 are located at the top of the lowermost rod or beam layer 10, connected to rods or beams 11a. In this arrangement, the circular fixing plates 33 are omitted, and instead the lower ends of some of the rods or beams 121c in the second layer 120 may be pivotally connected e.g. via connectors 130 to the central parts 42 of the infill elements 4 located at the top of the lowermost rod or beam layer 10. The ends of each infill element 4 include a fork 43a, 43b secured thereto, one of which 43a is pivotable about the longitudinal axis A₃ of the infill element 4 and the other 43b of which is non-pivotable.

Each infill connector 40 includes a pair of brackets 44, a first pivot pin 45 and a pair of second pivot pins 46. The brackets 44 extend perpendicularly from the central portion 22 of the relevant rod or beam 11a, 21, 121 with the first pivot pin 45 pivotably mounted to and extending between them in an orientation parallel to the rod or beam 21. Each of the second pivot pins 46 extends through a hole (not shown) in each of the arms of a respective one of the forks 43a, 43b of the infill element, through a pair of opposed hollow shoulder elements 46a and through a hole (not shown) in the first pivot pin 45.

Thus, each infill element 4 is pivotable about a first axis A₁ corresponding to the longitudinal axis of the first pivot pin 45 and about a second axis A₂ corresponding to the longitudinal axis of the second pivot pin 46. Each infill element 4 is also pivotable at one end 43a only about a third axis A₃ corresponding to the longitudinal axis of the infill element 4 itself.

When a loads L are imposed on the fixing plates 33 of the infill elements 4 via the skin 2, or loads L from the adjoining smaller-scale rod or beam layer 120 when connections are made by rods or beams 121c to the infill elements 4, this induces a twisting moment M along the longitudinal axis of the telescopic rods or beams 11a, 21, 121. This is partly due to the infill connectors 40 not being located on the longitudinal axis of the rods or beams 11a, 21, 121 but the pins 45 also act as pivot points A₁, leading to the moment M. However, this moment in one direction of rotation would generally be balanced by a generally equal load on the fixing plates 33 of the infill elements 4, or a load transmitted by adjoining smaller-scale rod or beam layer 120 when connections are preferably made by rods or beams 121c to the infill elements 4 from rods or beams 120, on the opposite side of the rod or beam 11a, 21, 121, as shown in Figure 9, thus opposing or at least reducing the initial moment force.

This moment M is avoided altogether by configuring the rods or beams 11a, 21, 121 such that axis A₁, formed by first pivot pin 45, is moved onto the longitudinal axis of the telescopic rods or beams 11a, 21, 121, as shown in Figure 10a. This is achieved by separating the two telescoping assemblies of tubes that comprise a single rod or beam 11a, 21, 121, and joining them with a tubular section/spacer 46b, whose longitudinal axis is on the longitudinal axis of rods or beams 11a, 21, 121. The tubular section/spacer replaces the first pivot point 45 and forms axis A₁. Brackets 44a, 44b connect forks 43a, 43b via the second pivot pins 46 to the tubular section/spacer. Brackets 44a, 44b pivot around the axis A₁ shared longitudinally by the rods or beams 11a, 21, 121 and the tubular section/spacer.

In addition, Figure 10b shows how this use of the tubular section/spacer 46b and the bracket 44a, 44b, pin 46 and fork 43a, 43b arrangement may be used to connect the ends of the extendable and/or retractable rods or beams 21b, 121b, 121c of the second array at the middle 12 and/or intermediate points 112a, 112b of the extendable and/or retractable rods or beams 11a of the first array.

There is also a tendency for the rods or beams 21 to rotate about their longitudinal axis in general use if they are not otherwise constrained, but this rotation is prevented, or at least mitigated, by installation throughout the array of the anti-rotation elements 34.

The anti-rotation elements 34 may also be (not shown), or may not be, installed to prevent, or at least mitigate, the rotation of infill elements 4, by either connecting together a pair of infill elements 4, or connecting an infill element to an adjacent rod or beam 11a, 21, 121.

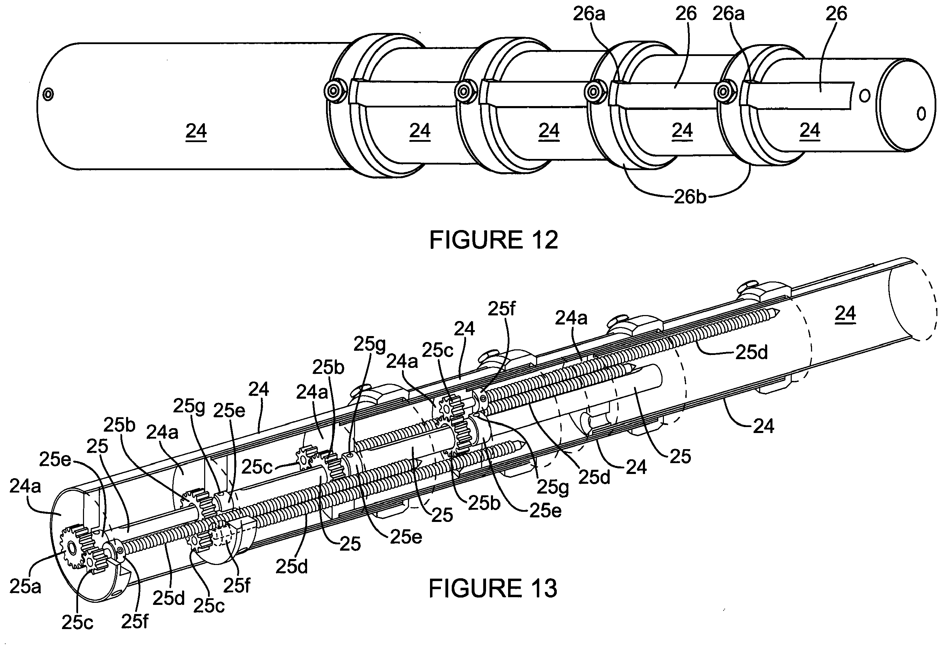

In this embodiment and as shown in more detail in Figures 10 to 13, each rod or beam 11, 21, 121 includes a series of hollow telescopic tubes 24 extending from each side of the central portion 12, 22. This arrangement enables the positioning of any relatively large components that may form part of the rod or beam 11, 21, 121, such as the drive motor 13, 23 away from the rod or beam connectors 3, 30, e.g. directly fixed to the central portion 12, 22.

The hollow telescopic tubes 24 may be round in cross section. In order to prevent unwanted rotation of the telescopic elements or hollow tubes 24 along their shared longitudinal axis, a key or ridge 26 that engages with a slot or keyway 26a, preferably formed within collars 26b which may be fixed to tubes 24, may be incorporated into each section of the telescoping elements or hollow tubes 24.

Each rod or beam 21, 121 of the second layer 20, 120 also includes a further three or more fixing plates 33 equispaced along their length between the ends thereof. One fixing plate 33 is secured to the central portion 22 of the rod or beam 21 and the additional fixing plates 33 are mounted to intermediate positions by a carriage 47. The arrangement shown in Figure 10 shows a carriage 47 comprised of a pair of arms 47a, one on either side of the telescopic tubes 24, secured at one of their ends to the end of one of the tubes 24 and at their other ends to a ring 47b slideable along another one of the tubes 24. Alternatively, as is shown in Figure 10a, the sliding element or ring 47b may be omitted, such that the arm or arms 47a are rigidly connected to or rigidly secured from or rigidly mounted solely at point 47c, at one of the ends of the telescopic tubes 24, without secondary support via ring 47b.

The extension and retraction of the series of telescopic tubes 24 is effected by a keyed drive shaft 25, comprised of a series of telescoping tubes, with a fixed gear 25a and collar 25e secured to an end thereof and rotatably mounted to an end plate 24a that is secured to a first end of the outermost tube 24. Each of the other tubes 24 in the series includes an end plate 24a with a collar 25e and a movable gear 25b rotatably mounted thereto that slidably engages the key 25g in the drive shaft 25 such that the movable gear 25b rotates on rotation of the drive shaft 25 but is able to slide freely therealong relative to the inner portion or portions of telescopic drive tube or tubes 25. Thus each length of driveshaft 25 is restrained relative to the end plate 24a and tube 24, whilst each length of and the whole extent of driveshaft 25 is still able to rotate along its longitudinal axis. Each tube 24 also includes a drive gear 25c and collar 25f secured to the end of a threaded shaft 25d, both of which are rotatably mounted to the end plate 24a such that the drive gear 25c engages the fixed gear 25a and/or one of the movable gears 25b of the drive shaft 25. Each threaded shaft 25d also engages a threaded hole in the end plate 24a of the subsequent tubes 24 in the series.

In the assembled condition shown in Figure 2 for example, the drive shaft 25 is coupled to the output shaft of the drive motor 13, 23. In use, a torque provided by the drive motor 13, 23 causes the drive shaft 25 to rotate, thereby rotating the fixed gear 25a and movable gears 25b, which causes the threaded shafts 25d to rotate and force the series of telescopic tubes 24 to extend or retract, depending on the direction of the rotation of the drive shaft of the drive motor 13, 23. This arrangement enables accurate and controllable extension and retraction of the rods or beams 11, 21, 121.

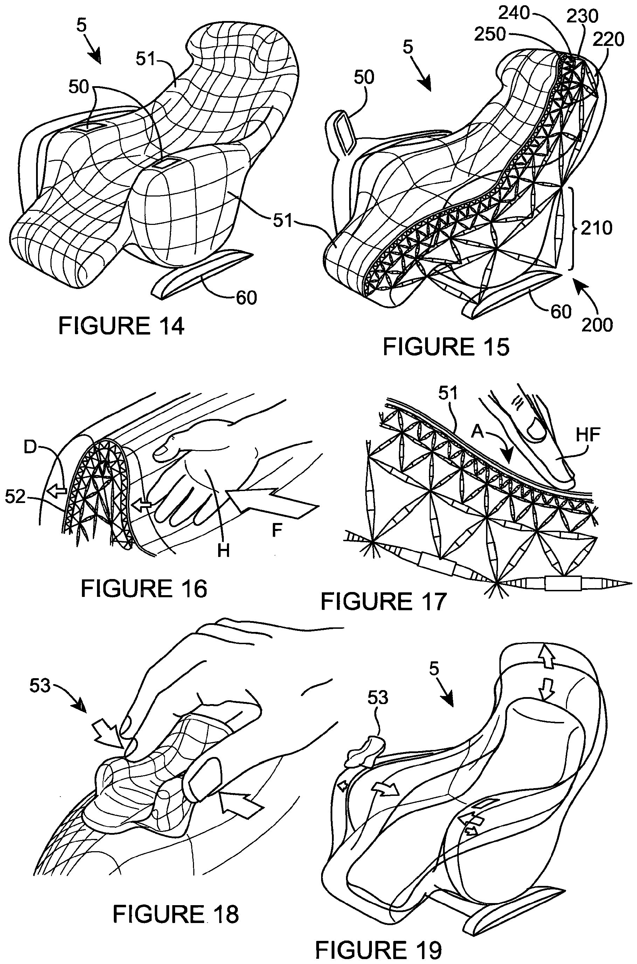

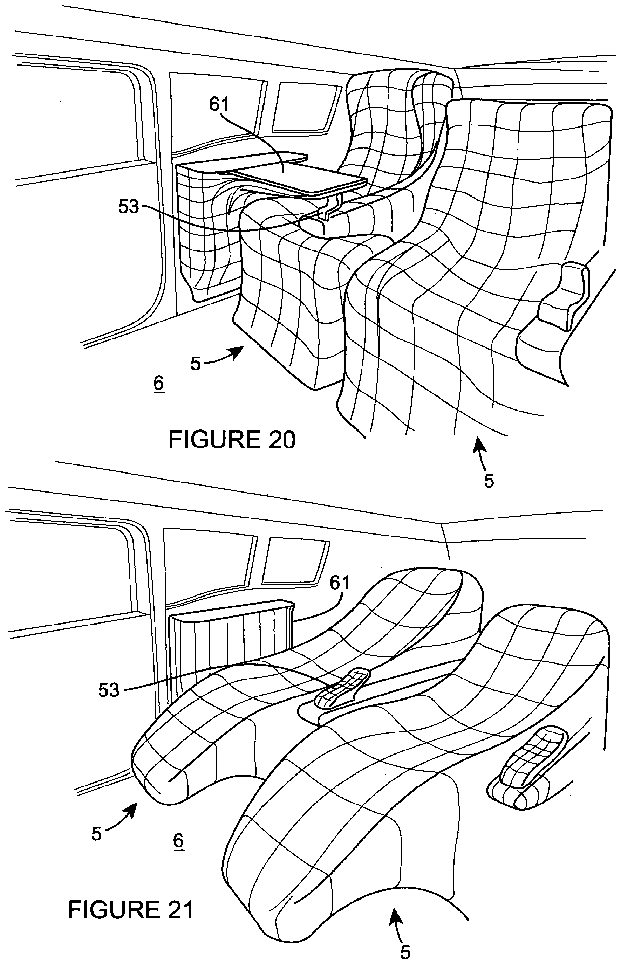

Turning now to Figures 14 to 21, there is shown a seat or chair 5 incorporating an adjustable structure 200 that includes five layers 210, 220, 230, 240, 250 of rods or beams arranged in arrays with progressively increasing densities and having the same features as the layers 10, 20, 120 described above, wherein like reference refer to like features. The rods or beams in the lowermost layer 210 are pivotally secured to a chair base 60 and the uppermost layer 250 includes an elastic resilient and/or elastic foam based skin 51 secured thereto in the manner described above. The seat 5 may be installed or incorporated in a vehicle 6 as shown in Figures 20 and 21, which may be an airplane, spacecraft, train, automobile, limousine or any other vehicle, or may simply be placed in the living room of a home or any room within or outside any other type of building.

The seat 5 incorporates a control system that includes a controller 50 incorporated within or located adjacent the seat 5, as shown in Figures 14 and 15 respectively, and operatively connected to the drive motors 13, 23 for providing command signals thereto and to a series of pressure sensors incorporated within skin 51 and/or the the fixing plates 33 and/or sensors that detect the imposed load along the longitudinal axes of the rods or beams in the various layers 210, 220, 230, 240, 250 for receiving input signals therefrom. In this embodiment, the controller 50 is connected to the drive motors 13, 23 and pressure sensors by wires (not shown), but the use of wireless communication technology and/or a conductive path (not shown) formed by the components of the structure and/or any other suitable technology is also envisaged.

The control system in this embodiment is configured to operate in one of a plurality of modes that are selectable via the controller 50. In a first mode, signals received from the pressure sensors of the skin 51 and/or the fixing plates 33 are compared to signals received from adjacent pressure sensors and/or sensors that detect the imposed load along the longitudinal axes of the rods or beams in the various layers 210, 220, 230, 240, 250 and, subsequently the drive motors 13, 23 in the uppermost, denser layers 230, 240, 250 are operated to alter the outer portion of the structure 200 to provide a pre-determined stiffness or softness to simulate a cushion-like structure. The degree of stiffness or softness is selected using the controller 50, which adapts the control algorithm accordingly.

In a second mode, the signals received from the pressure sensors of the skin 51 and/or the fixing plates 33 and/or sensors that detect the imposed load along the longitudinal axes of the rods or beams in the various layers 210, 220, 230, 240, 250 are used to operate the drive motors 13, 23 in the lowermost, coarser layers 210, 220 to alter configuration of the seat 5. As shown more clearly in Figure 16, a force F applied by the hand H of a user to an arm rest 52 of the seat 5 causes the controller 50 to send a signal to the drive motors 13, 23 in the coarser layers 210, 220 and, to a lesser degree, 230 to move the armrest in the direction D of the force F.

In a third mode, the signals received from the pressure sensors of the skin 51 and/or the fixing plates 33 and/or sensors that detect the imposed load along the longitudinal axes of the telescopic rods or beams in the various layers 210, 220, 230, 240, 250 are used to operate the drive motors 13, 23 in all of the layers 210, 220, 230, 240, 250 according to a predetermined relationship to provide adjustment of an intermediate coarseness. As shown more clearly in Figure 17, the surface topography of the structure 200 can be altered in this mode by applying pressure to one or more areas A of the skin 51, for example using a finger HF.

The seat 5 may advantageously be provided with a small or same or large scale force feedback model 53 operatively connected to the controller 50 to be used in conjunction with a fourth mode of the control system. The model 53 includes an internal structure, which may, but need not, mimic the telescopic rod or beam structure of the seat 5 and includes a series of sensors for detecting forces applied to and/or movements of portions of the model and feeding these back to the controller 50. In this mode, the input signals received from the model 53 are used to control the drive motors 13, 23 in the structure 200 to replicate the manipulation of the model 53 by the user.

Optionally, resistance to movement encountered and sensed by the seat 5 may be, but need not be, fed back to the model 53, such that the user of the model 53 feels these resistances when they attempt to change the form of the control model 53. The resistances may be replicated in the model 53 by the controlled deformation of its internal structure, with the deformations controlled either by localised control units on each rod/beam and/or other element of structure, and/or a cluster of rods/beams and/or element of internal structure, and/or a separate control unit.

The control system may also include further modes that incorporate any number of combinations of the aforementioned modes. In some embodiments, the pressure sensors of the skin 51 and/or the fixing plates 33 and/or sensors that detect the imposed load along the longitudinal axes of the telescopic rods or beams in the various layers 210, 220, 230, 240, 250 are divided into different sectors, wherein each sector is configured to operate in one of the aforementioned modes. For example, the surface on which a user sits may be configured in the first mode, the arm rests 52 may be configured in the second mode and pre-determined portions of the back rest may be configured in the third mode. It will be appreciated that the control system may be configured with any number of combinations of the aforementioned modes or any further modes. The control system may be configured to distinguish between vertical and non-vertical loads and, for example, to resist vertical loads while responding to non-vertical loads.

As shown in Figures 20 and 21, the vehicle 6 may also include a deformable surface, in this example shown as a retractable table 61 also formed of an adjustable structure according to the invention. The table 61 may be configurable to operate in the second mode as described above, wherein a user simply grips a portion thereof and either pulls that portion outwardly to deploy the table 61 or pushes that portion toward the wall to retract the table 61.

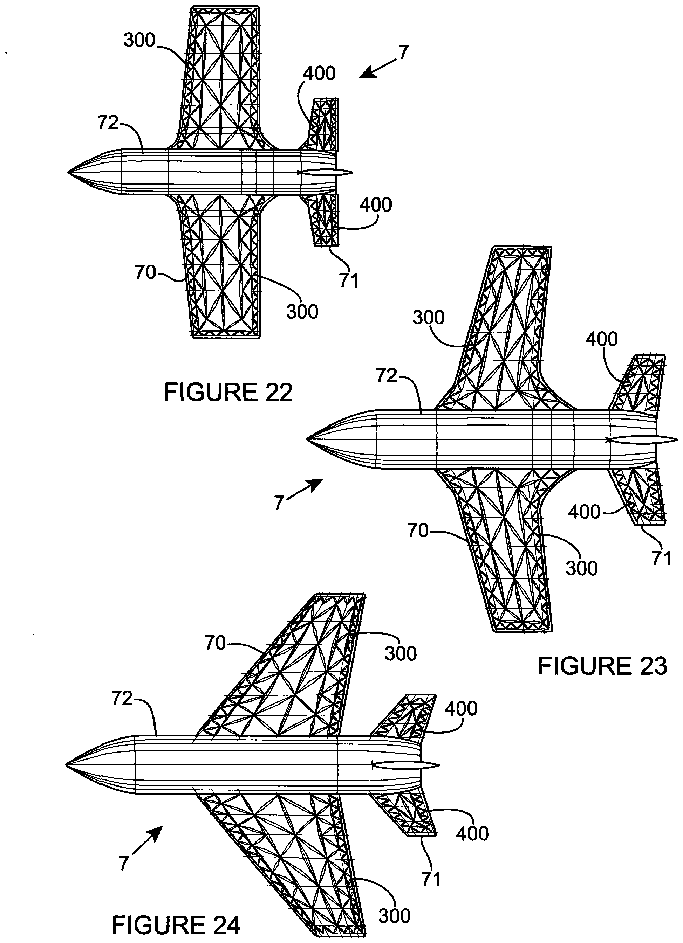

Turning now to Figures 22 to 27, there is shown an aircraft 7 with wings 70, tailplane 71 and a fuselage 72 each incorporating a respective structure 300, 400, 500 according to the invention. As illustrated by Figures 22 to 24, the shape of the wings 70 and tailplane 71 of the aircraft 7 in this embodiment are reconfigurable to suit a plurality of different performance requirements. This reconfiguration may be performed dynamically while the aircraft 7 is in flight, for example to adapt the performance characteristics of the aircraft 7 when moving between high speed travel and/or reconnaissance and/or combat situations.

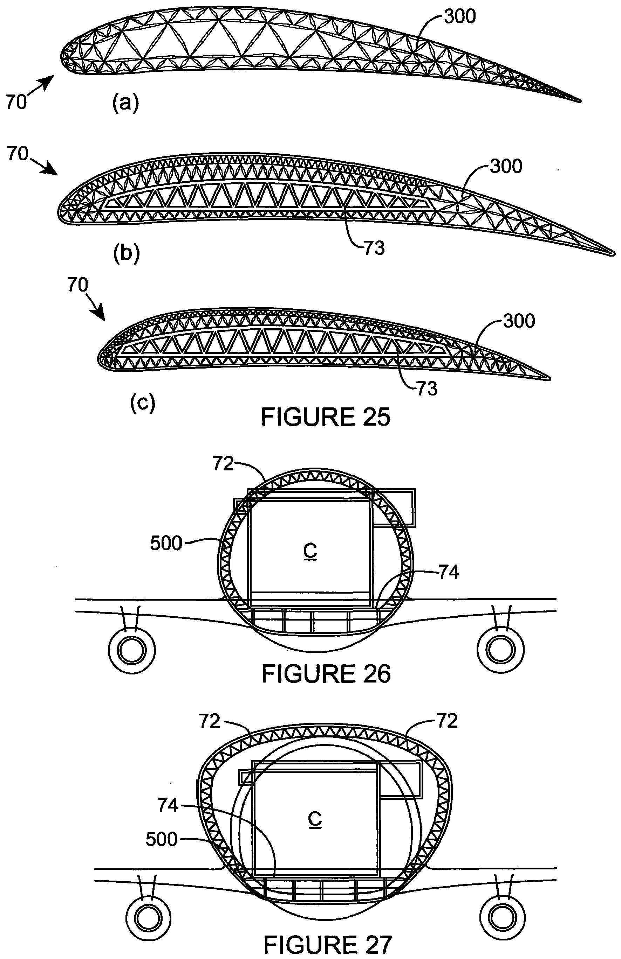

Figure 25(a) shows the cross-section of a wing 70 whose entire structure 300 is provided by extendable and/or retractable rods or beams, while Figures 25(b) and 25(c) show the cross-section of a wing 70 that incorporates a fixed-form base frame 73 to which the extendable and/or retractable rods or beams are mounted.

The adjustable structures 300, 400 of the wings 70 and tailplane 71 in this embodiment are also configured to replace the traditional construction of flaps, ailerons, elevator and rudder with continuous control surfaces whose angle and shape are changed to provide the same function as these traditional elements.

The shape of the fuselage 72 is also reconfigurable in this embodiment, for example to alter the aerodynamic characteristics of the aircraft or to accommodate on its floor 74 a load of cargo C having a particular shape. Figures 26 and 27 illustrate an application in which the fuselage 72 is distorted to accommodate a load with a particularly awkward shape.

It will be appreciated by those skilled in the art that multiple variations of the aforementioned embodiments are envisaged without departing from the scope of the invention. For example, the array of rods or beams 11, 21, 121 need not be arranged in a triangular or pyramidal array and may instead by arranged in a quadrilateral or cuboidal array or any other polygonal array or combination of two or more such arrays.

One or more of the rods or beams 11, 21, 121 need not include drive motors 13, 23, for example in applications where only passive resistance to extension or retraction thereof such drive motors may be replaced with a regulator or resistance means (not shown) that may be configured to inhibit or at least partially inhibit the extension and/or retraction thereof.

Moreover, the control systems described above rely on a centralised controller 50 that processes input signals and controls the drive motors 13, 23 accordingly. However, in large scale and/or complex systems it may be advantageous to provide independent controllers on each or a group of rods or beams 11, 21, 121. These controllers may, for example, operate on a hierarchical basis, wherein command signals received from a central controller 50 are processed in conjunction with feedback signals received from one or more or a plurality of sensors by an algorithm to determine the control signal to be sent to any particular drive motor 13, 23 or group of drive motors 13, 23. These sensors may be comprised, or may not be comprised, of pressure sensors within the skin 51 and/or on the fixing plates 33, and/or sensors that detect the imposed load along the longitudinal axes of the telescopic rods or beams in the various layers 210, 220, 230, 240, 250. The sensors may also detect the presence and/or movement of other nearby objects, and/or temperature, humidity, capacitance and/or any other measureable property or properties, or any combination thereof, of their surroundings.

It will also be appreciated by those skilled in the art that any number of combinations of the aforementioned features and/or those shown in the appended drawings provide clear advantages over the prior art and are therefore within the scope of the invention described herein and defined by the appended claims.

## Claims

1. An adjustable structure (1) comprising an array of beams (11, 11a, 11b, 21, 21a, 21b) pivotally connected together at their ends by one or more tension joints (3, 3a, 3b, 30a, 30b, 130), the or each tension joint comprising two or more entwined or intertwined flexible lines (31) connected to adjacent beam ends by respective beam connectors (3), each end of each line (31) being received and secured to a respective beam connector (3), wherein at least one of the lines (31) is adjustably connected to at least one beam end by a tension adjustor (32) of the beam connector (3) which has a threaded portion that threadedly engages the beam end for adjusting the tension of the line (31) along said beam (11, 11a, 11b, 21, 21a, 21b).

2. An adjustable structure (1) comprising an array of beams (11, 11a, 11b, 21, 21a, 21b) pivotally connected together at their ends by one or more tension joints (3, 3a, 3b, 30a, 30b, 130), the or each tension joint comprising three or more flexible lines (31) formed integrally or bonded together at one of their ends and connected by a beam connector (3) to a respective beam end at the other of their ends, wherein at least one of the lines (31) is adjustably connected to at least one beam end by a tension adjustor (32) of the beam connector (3) which has a threaded portion that threadedly engages the beam end for adjusting the tension of the line (31) along said beam (11, 11a, 11b, 21, 21a, 21b).

3. Structure according to any preceding claim comprising a beam connector (3, 3a, 3b, 30a, 30b, 130) including a barrel (37) and the tension adjustor (32), wherein a portion of the line (31) is held within the barrel (37) and adjustable along the beam by the tension adjustor (32).

4. Structure according to claim 3, wherein the tension adjustor comprises a first telescopic elements (35) that engages the line (31) and a second telescopic element (36) that telescopically engages the first telescopic element (35), the first telescopic element (35) threadedly engaging the barrel (37) and radially engaging the second telescopic element (36) to inhibit relative rotation therebetween and to permit axial or telescopic movement therebetween.

5. Structure according to claim 4, wherein the radial engagement between the first and second telescopic elements (35, 36) is provided by one or more radial pins (35b) or ridges secured to one of the telescopic elements (35, 36) and engages a slot (36e) in the other of the telescopic elements (36, 35).

6. Structure according to claim 4 or claim 5, wherein one of the telescopic elements (35, 36) comprises a grip feature (36f) for engaging with an adjustment tool for adjusting the tension adjustor (32).

7. Structure according to any preceding claim further comprising a first structural layer (10) defined by a first array of extendable beams (11, 11a, 11b) pivotally connected to each other at their ends and a second structural layer (20) connected to the first structural layer (10) and defined by a second array of extendable beams (21, 21a, 21b) pivotally connected to each other at their ends, wherein at least a portion of the second layer (20) is outside the volume defined by the first structural layer (10) and the extendable beams (21, 21a, 21b) in the second array are more densely packed than the extendable beams (11, 11a, 11b) in the first array, wherein said first structural layer (10) and said second structural layer (20) are each an adjustable structure according to any preceding claim, comprising an array of said extendable beams (11, 11a, 11b, 21, 21a, 21b) pivotally connected together at their ends by said one or more tension joints (3, 3a, 3b, 30a, 30b, 130).

8. Structure according to any preceding claim, wherein at least one array comprises a three-dimensional polygonal array.

9. Structure according to claim 8, wherein the at least one three-dimensional polygonal array comprises a triangular or pyramidal or tetrahedral or octahedral array.

10. Structure according to any preceding claim, wherein one or more of the tension joints (3, 3a, 3b, 30a, 30b, 130) further comprises an anti-rotation element (34).

11. Structure according to any preceding claim, wherein each of the beams (11, 11a, 11b, 21, 21a, 21b) comprises a series of telescopic parts (24).

12. Structure according to any preceding claim, wherein the beams (11, 11a, 11b, 21, 21a, 21b) are extendable and/or retractable and define a structural layer (10, 20), the structure further comprising an array of infill elements (4) pivotally connected at their ends to a respective or adjacent extendable beam (11, 11a, 11b, 21, 21a, 21b) and a drive means (13, 23, 25) configured to extend or retract the extendable beams (11, 11a, 11b, 21, 21a, 21b), wherein the infill elements (4) are extendable or retractable, in use, in response to the extension or retraction of the extendable beams (11, 11a, 11b, 21, 21a, 21b).

13. Structure according to claim 12 further comprising a drive motor (13, 23) coupled to a keyed drive shaft (25) rotatably mounted to each beam (11, 11a, 11b, 21, 21a, 21b) and slidably engaging a series of movable gears (25c), wherein each movable gear (25c) is rotatably mounted to a respective telescopic part (24) and secured to an end of a threaded shaft (25d) that threadedly engages one or more subsequent telescopic parts (24) in the series to drive the extension and/or retraction of the telescopic parts (24) of the beam (11, 11a, 11b, 21, 21a, 21b).

14. Structure according to claim 13, wherein the drive shaft (25), the movable gears (25c) and the threaded shafts (25d) of each beam (11, 11a, 11b, 21, 21a, 21b) are contained within the telescopic parts (24).

## Patentansprüche

1. Einstellbare Struktur (1), umfassend eine Anordnung von Trägern (11, 11a, 11b, 21, 21a, 21b), die an ihren Enden durch ein oder mehrere Zuggelenke (3, 3a, 3b, 30a, 30b, 130) schwenkbar miteinander verbunden sind, wobei das oder jedes Zuggelenk zwei oder mehr verschlungene oder ineinander verschlungene flexible Leinen (31) umfasst, die durch entsprechende Trägerverbinder (3) mit benachbarten Trägerenden verbunden sind, wobei jedes Ende jeder Leine (31) an einem jeweiligen Trägerverbinder (3) aufgenommen und an diesem befestigt ist, wobei mindestens eine der Leinen (31) mit mindestens einem Trägerende durch einen Spannungseinsteller (32) des Trägerverbinders (3) einstellbar verbunden ist, der einen Gewindeabschnitt aufweist, der gewindemäßig mit dem Trägerende in Eingriff steht, um die Spannung der Leine (31) entlang des Trägers (11, 11a, 11b, 21, 21a, 21b) einzustellen.

2. Einstellbare Struktur (1), umfassend eine Anordnung von Trägern (11, 11a, 11b, 21, 21a, 21b), die an ihren Enden durch ein oder mehrere Zuggelenke (3, 3a, 3b, 30a, 30b, 130) schwenkbar miteinander verbunden sind, wobei das oder jedes Zuggelenk drei oder mehr flexible Leinen (31) umfasst, die einstückig ausgebildet oder an einem ihrer Enden miteinander verklebt sind und durch einen Trägerverbinder (3) mit einem entsprechenden Trägerende an den anderen ihrer Trägerenden verbunden sind, wobei mindestens eine der Leinen (31) mit mindestens einem Trägerende durch einen Spannungseinsteller (32) des Trägerverbinders (3) einstellbar verbunden ist, der einen Gewindeabschnitt aufweist, der gewindemäßig mit dem Trägerende in Eingriff steht, um die Spannung der Leine (31) entlang des Trägers (11, 11a, 11b, 21, 21a, 21b) einzustellen.

3. Struktur nach einem der vorhergehenden Ansprüche, umfassend einen Trägerverbinder (3, 3a, 3b, 30a, 30b, 130), der einen Zylinder (37) und den Spannungseinsteller (32) umfasst, wobei ein Teil der Leine (31) innerhalb des Zylinders (37) gehalten wird und durch den Spannungseinsteller (32) entlang des Trägers einstellbar ist.

4. Struktur nach Anspruch 3, wobei der Spannungseinsteller ein erstes Teleskopelement (35), das mit der Leine (31) in Eingriff steht, und ein zweites Teleskopelement (36), das mit dem ersten Teleskopelement (35) teleskopisch in Eingriff steht, umfasst, wobei das erste Teleskopelement (35) gewindemäßig mit dem Zylinder (37) in Eingriff steht und radial mit dem zweiten Teleskopelement (36) in Eingriff steht, um eine relative Drehung dazwischen zu verhindern und eine axiale oder teleskopische Bewegung dazwischen zuzulassen.

5. Struktur nach Anspruch 4, wobei der radiale Eingriff zwischen dem ersten und dem zweiten Teleskopelement (35, 36) durch einen oder mehrere Radialstifte (35b) oder Rippen bereitgestellt wird, die an einem der Teleskopelemente (35, 36) befestigt sind und in einen Schlitz (36e) im anderen der Teleskopelemente (36, 35) eingreifen.

6. Struktur nach Anspruch 4 oder Anspruch 5, wobei eines der Teleskopelemente (35, 36) ein Griffmerkmal (36f) zum Eingriff mit einem Einstellwerkzeug zum Einstellen des Spannungseinstellers (32) umfasst.

7. Struktur nach einem der vorhergehenden Ansprüche, ferner umfassend eine erste Strukturschicht (10), die durch eine erste Anordnung von ausziehbaren Trägern (11, 11a, 11b) definiert ist, die an ihren Enden schwenkbar miteinander verbunden sind, und eine zweite Strukturschicht (20), die mit der ersten Strukturschicht (10) verbunden ist und durch eine zweite Anordnung von ausziehbaren Trägern (21, 21a, 21b) definiert ist, die an ihren Enden schwenkbar miteinander verbunden sind, wobei mindestens ein Teil der zweiten Schicht (20) außerhalb des durch die erste Strukturschicht (10) definierten Volumens liegt und die ausziehbaren Träger (21, 21a, 21b) in der zweiten Anordnung dichter gepackt sind als die ausziehbaren Träger (11, 11a, 11b) in der ersten Anordnung, wobei die erste Strukturschicht (10) und die zweite Strukturschicht (20) jeweils eine einstellbare Struktur gemäß einem der vorhergehenden Ansprüche sind, die eine Anordnung der ausziehbaren Träger (11, 11a, 11b, 21, 21a, 21b) umfasst, die an ihren Enden durch den einen oder die mehreren Zuggelenke (3, 3a, 3b, 30a, 30b, 130) schwenkbar miteinander verbunden sind.

8. Struktur nach einem der vorhergehenden Ansprüche, wobei mindestens eine Anordnung ein dreidimensionale polygonale Anordnung umfasst.

9. Struktur nach Anspruch 8, wobei die mindestens eine dreidimensionale polygonale Anordnung eine dreieckige oder pyramidenförmige oder tetraedrische oder oktaedrische Anordnung umfasst.

10. Struktur nach einem der vorhergehenden Ansprüche, wobei ein oder mehrere der Zuggelenke (3, 3a, 3b, 30a, 30b, 130) ferner ein Verdrehsicherungselement (34) umfassen.

11. Struktur nach einem der vorhergehenden Ansprüche, wobei jeder der Träger (11, 11a, 11b, 21, 21a, 21b) eine Reihe von Teleskopteilen (24) umfasst.

12. Struktur nach einem der vorhergehenden Ansprüche, wobei die Träger (11, 11a, 11b, 21, 21a, 21b) ausziehbar und/oder einziehbar sind und eine Strukturschicht (10, 20) definieren, wobei die Struktur ferner eine Anordnung von Füllelementen (4), die an ihren Enden mit einem jeweiligen oder benachbarten ausziehbaren Träger (11, 11a, 11b, 21, 21a, 21b) schwenkbar verbunden sind, und eine Antriebseinrichtung (13, 23, 25) umfasst, die konfiguriert ist, um die ausziehbaren Träger (11, 11a, 11b, 21, 21a, 21b) auszuziehen oder einzuziehen, wobei die Füllelemente (4), im Gebrauch, als Reaktion auf das Ausziehen oder Einziehen der ausziehbaren Träger (11, 11a, 11b, 21, 21a, 21b) ausziehbar oder einziehbar sind.

13. Struktur nach Anspruch 12, ferner umfassend einen Antriebsmotor (13, 23), der mit einer verkeilten Antriebswelle (25) gekoppelt ist, die drehbar an jedem Träger (11, 11a, 11b, 21, 21a, 21b) montiert ist und eine Reihe beweglicher Zahnräder (25c) verschiebbar in Eingriff bringt, wobei jedes bewegliche Zahnrad (25c) drehbar an einem jeweiligen Teleskopteil (24) montiert und an einem Ende einer Gewindewelle (25d) befestigt ist, die gewindemäßig mit einem oder mehreren nachfolgenden Teleskopteilen (24) in der Reihe in Eingriff steht, um das Ausziehen und/oder Einziehen der Teleskopteile (24) des Trägers (11, 11a, 11b, 21, 21a, 21b) anzutreiben.

14. Struktur nach Anspruch 13, wobei die Antriebswelle (25), die beweglichen Zahnräder (25c) und die Gewindewellen (25d) jedes Trägers (11, 11a, 11b, 21, 21a, 21b) in den Teleskopteilen (24) enthalten sind.

## Revendications

1. Structure réglable (1) comprenant un réseau de poutres (11, 11a, 11b, 21, 21a, 21b) reliées les unes aux autres de manière pivotante au niveau de leurs extrémités par une ou plusieurs jonctions de tension (3, 3a, 3b, 30a, 30b, 130), la ou chaque jonction de tension comprenant au moins deux lignes flexibles enguirlandées ou entrelacées (31) reliées aux extrémités de poutre adjacentes par des connecteurs de poutre respectifs (3), chaque extrémité de chaque ligne (31) étant reçue et fixée à un connecteur de poutre respectif (3), dans laquelle au moins une des lignes (31) est reliée de manière réglable à au moins une extrémité de poutre par un ajusteur de tension (32) du connecteur de poutre (3) qui a une partie filetée qui se solidarise par filetage à l'extrémité de poutre pour régler la tension de la ligne (31) le long de ladite poutre (11, 11a, 11b, 21, 21a, 21b).

2. Structure réglable (1) comprenant un réseau de poutres (11, 11a, 11b, 21, 21a, 21b) reliées les unes aux autres de manière pivotante au niveau de leurs extrémités par une ou plusieurs jonctions de tension (3, 3a, 3b, 30a, 30b, 130), la ou chaque jonction de tension comprenant au moins trois lignes flexibles (31) formées d'un seul tenant ou liées les unes aux autres au niveau de l'une de leurs extrémités et reliées par un connecteur de poutre (3) à une extrémité de poutre respective au niveau de l'autre de leurs extrémités, dans laquelle au moins l'une des lignes (31) est reliée de manière réglable à au moins une extrémité de poutre par un ajusteur de tension (32) du connecteur de poutre (3) qui a une partie filetée qui se solidarise par filetage à l'extrémité de poutre pour régler la tension de la ligne (31) le long ladite poutre (11, 11a, 11b, 21, 21a, 21b).

3. Structure selon l'une quelconque des revendications précédentes comprenant un connecteur de faisceau (3, 3a, 3b, 30a, 30b, 130) comprenant un cylindre (37) et l'ajusteur de tension (32), dans laquelle une partie de la ligne (31) est maintenue à l'intérieur du cylindre (37) et est réglable le long de la poutre par l'ajusteur de tension (32).

4. Structure selon la revendication 3, dans laquelle l'ajusteur de tension comprend un premier élément télescopique (35) qui se solidarise à la ligne (31) et un deuxième élément télescopique (36) qui se solidarise de manière télescopique au premier élément télescopique (35), le premier élément télescopique (35) se solidarisant par filetage au cylindre (37) et se solidarisant radialement au deuxième élément télescopique (36) pour empêcher la rotation relative entre eux et pour permettre un mouvement axial ou télescopique entre eux.

5. Structure selon la revendication 4, dans laquelle la solidarisation radiale entre les premier et deuxième éléments télescopiques (35, 36) est assuré par une ou plusieurs goupilles radiales (35b) ou arêtes fixées à l'un des éléments télescopiques (35, 36) et solidarise une fente (36e) dans l'autre des éléments télescopiques (36, 35).

6. Structure selon la revendication 4 ou la revendication 5, dans laquelle l'un des éléments télescopiques (35, 36) comprend une caractéristique de préhension (36f) pour solidarisation à un outil de réglage pour régler l'ajusteur de tension (32).

7. Structure selon l'une quelconque des revendications précédentes, comprenant en outre une première couche structurelle (10) définie par une première matrice de poutres extensibles (11, 11a, 11b) reliées de manière pivotante les une aux autres au niveau de leurs extrémités et une deuxième couche structurelle (20) reliée à la première couche structurelle (10) et définie par une deuxième matrice de poutres extensibles (21, 21a, 21b) reliées de manière pivotante les unes aux autres au niveau de leurs extrémités, dans laquelle au moins une partie de la deuxième couche (20) est à l'extérieur du volume défini par la première couche structurelle (10) et les poutres extensibles (21, 21a, 21b) dans la deuxième matrice sont plus densément compactées que les poutres extensibles (11, 11a, 11b) dans la première matrice, dans laquelle ladite première couche structurelle (10) et ladite deuxième couche structurelle (20) sont chacune une structure ajustable selon l'une quelconque des revendications précédentes, comprenant une matrice desdites poutres extensibles (11, 11a, 11b, 21, 21a, 21b) reliées les unes aux autres de manière pivotante au niveau de leurs extrémités par lesdites une ou plusieurs jonctions de tension (3, 3a, 3b, 30a, 30b, 130).

8. Structure selon l'une quelconque des revendications précédentes, dans laquelle au moins une matrice comprend une matrice polygonale tridimensionnelle.

9. Structure selon la revendication 8, dans laquelle l'au moins une matrice polygonale tridimensionnelle comprend une matrice triangulaire ou pyramidale ou tétraédrique ou octaédrique.

10. Structure selon l'une quelconque des revendications précédentes, dans laquelle une ou plusieurs des jonctions de tension (3, 3a, 3b, 30a, 30b, 130) comprennent en outre un élément anti-rotation (34).

11. Structure selon l'une quelconque des revendications précédentes, dans laquelle chacune des poutres (11, 11a, 11b, 21, 21a, 21b) comprend une série de pièces télescopiques (24).

12. Structure selon l'une quelconque des revendications précédentes, dans laquelle les poutres (11, 11a, 11b, 21, 21a, 21b) sont extensibles et / ou rétractables et définissent une couche structurelle (10, 20), la structure comprenant en outre une matrice d'éléments de remplissage (4) reliés de manière pivotante au niveau de leurs extrémités à une poutre extensible respective ou adjacente (11, 11a, 11b, 21, 21a, 21b) et un moyen d'entraînement (13, 23, 25) configuré pour étendre ou rétracter les poutres extensibles (11, 11a, 11b, 21, 21a, 21b), dans laquelle les éléments de remplissage (4) sont extensibles ou rétractables, en utilisation, en réponse à l'extension ou à la rétraction des poutres extensibles (11, 11a, 11b, 21, 21a, 21b).

13. Structure selon la revendication 12, comprenant en outre un moteur d'entraînement (13, 23) couplé à un arbre d'entraînement claveté (25) monté de manière rotative sur chaque poutre (11, 11a, 11b, 21, 21a, 21b) et engrenant de manière coulissante une série d'engrenages mobiles (25c), dans laquelle chaque engrenage mobile (25c) est monté rotatif sur une partie télescopique respective (24) et fixé à une extrémité d'un arbre fileté (25d) qui se solidarise par filetage à une ou plusieurs parties télescopiques suivantes (24) de la série pour entraîner l'extension et / ou la rétraction des parties télescopiques (24) de la poutre (11, 11a, 11b, 21, 21a, 21b).

14. Structure selon la revendication 13, dans laquelle l'arbre d'entraînement (25), les engrenages mobiles (25c) et les arbres filetés (25d) de chaque poutre (11, 11a, 11b, 21, 21a, 21b) sont contenus dans les parties télescopiques (24).
